# EUROPEAN PATENT APPLICATION

(11) **EP 4 615 100 A1**
(43) Date of publication of application: **10.09.2025**
(21) Application number: 23885018.4
(22) Date of filing: 02.11.2023
(51) Int. Cl.: H04W 72/0446

(54) **TRANSMISSION CONFIGURATION DETERMINATION METHOD AND APPARATUS, AND STORAGE MEDIUM**

(30) Priority: 04.11.2022 CN 202211380111
(71) Applicant: Datang Mobile Communications Equipment Co., Ltd., Beijing 100085 (CN)
(72) Inventor: ZHAO, Yue, Beijing 100085 (CN); SI, Qianqian, Beijing 100085 (CN); GAO, Xuejuan, Beijing 100085 (CN); XING, Yanping, Beijing 100085 (CN)
(74) Representative: Studio Torta S.p.A.
(86) International application number: PCT/CN2023/129192
(87) International publication number: WO 2024/094092

(57) **Abstract**

Provided in the embodiments of the present disclosure are a transmission configuration determination method and apparatus, and a storage medium. The transmission configuration determination method is applied to a terminal, and comprises: determining a symbol category of a time unit according to symbol category indication information; and determining a transmission configuration on a target resource in the time unit according to the symbol category.

## Description

### CROSS-REFERENCES TO RELATED APPLICATIONS

The present application claims priority to Chinese patent application No. 202211380111.0 filed on November 04, 2022, entitled "Transmission Configuration Determination Method and Apparatus, and Storage Medium", which is hereby incorporated by reference in its entirety.

### FIELD

The present application relates to the field of communications, and in particular, to methods and apparatuses for transmission configuration determination, and a storage medium.

### BACKGROUND

In the new radio (NR), R18 version of the protocol studies non-overlapping sub-band full-duplex, that is, frequency domain resources are divided into multiple sub-bands that do not overlap with each other, uplink frequency domain resources and downlink frequency domain resources are located in different sub-bands, and a network side has a capability to perform sending and reception simultaneously.

In R15, R16 and R17 versions of the protocol, a network configures types of a transmission direction on a slot or a symbol through symbol category indication information in system information block 1 (SIB1), which include an uplink type, a downlink type and a flexible type, and symbol categories corresponding to these three types are U, D and F. However, in the related art, a user equipment (UE) side does not have a duplex capability, and does not distinguish transmission directions on resources within a time unit. Transmission uplink or reception downlink behavior of a UE can only be known through all or part of signalings in configured symbol category indication information, and a transmission direction on each frequency domain resource part within each time unit is not configured. Therefore, it is impossible to determine the transmission direction on each frequency domain resource part within each time unit.

### BRIEF SUMMARY

Embodiments of the present application provide methods and apparatuses for transmission configuration determination, and a storage medium, to solve a problem in the related art that a transmission direction on each frequency domain resource part within a time unit cannot be determined.

An embodiment of the present application provides a method for transmission configuration determination, performed by a terminal, including:
determining a symbol category of a time unit based on symbol category indication information; and
determining a transmission configuration on a target resource within the time unit based on the symbol category.

In some embodiments, the target resource includes one or more of the following resources:
a first resource, where the first resource is an uplink sub-band; or
a second resource, where the second resource is a sub-band other than an uplink sub-band within a bandwidth part range; or the second resource is a sub-band other than an uplink sub-band and a guard band within a bandwidth part range.

In some embodiments, in case that the symbol category is downlink, the transmission configuration includes one or more of the following:
the terminal performs uplink transmission on the first resource within the time unit;
the terminal performs downlink reception on the second resource within the time unit; or
the terminal does not perform uplink transmission on the second resource within the time unit.

In some embodiments, the symbol category indication information includes one or more of the following:
first configuration information, where the first configuration information includes time division duplex uplink-downlink configuration common information and/or time division duplex uplink-downlink configuration dedicated information; or
second configuration information, where the second configuration information includes slot format indicator information in downlink control information (DCI) format 2-0.

In some embodiments, the method further includes:
determining time domain configuration information of a sub-band,
where in case that the first configuration information indicates that the symbol category is downlink, the transmission configuration includes one or more of the following:
   in case that the time domain configuration information of the sub-band is carried by a second-type message, the terminal does not perform downlink reception on the first resource within the time unit;
   in case that the time domain configuration information of the sub-band is carried by a first-type message, the terminal does not perform downlink reception on the first resource within the time unit; or
   in case that the time domain configuration information of the sub-band is carried by a first-type message, the terminal performs downlink reception on the first resource within the time unit.

In some embodiments, in case that the first configuration information indicates that the symbol category is flexible and the second configuration information indicates that the symbol category is downlink, the transmission configuration includes one of the following:
the terminal performs downlink reception on the first resource within the time unit; or
the terminal does not perform downlink reception on the first resource within the time unit.

In some embodiments, the method further includes:
determining time domain configuration information of a sub-band,
where in case that the first configuration information indicates that the symbol category is flexible, or in case that the second configuration information indicates that the symbol category is flexible, the transmission configuration includes one or more of the following:
   in case that the time domain configuration information of the sub-band is carried by a second-type message, the terminal performs uplink transmission on the first resource within the time unit;
   in case that the time domain configuration information of the sub-band is carried by a second-type message, the terminal does not perform downlink reception on the first resource within the time unit;
   in case that the time domain configuration information of the sub-band is carried by a second-type message, the terminal performs downlink reception on the second resource within the time unit;
   in case that the time domain configuration information of the sub-band is carried by a first-type message, the terminal performs uplink transmission on the first resource within the time unit;
   in case that the time domain configuration information of the sub-band is carried by a first-type message, the terminal does not perform downlink reception on the first resource within the time unit;
   in case that the time domain configuration information of the sub-band is carried by a first-type message, the terminal performs downlink reception on the second resource within the time unit;
   in case that the time domain configuration information of the sub-band is carried by a first-type message, the terminal performs flexible transmission on the first resource within the time unit; or
   in case that the time domain configuration information of the sub-band is carried by a first-type message, the terminal performs flexible transmission on the second resource within the time unit.

In some embodiments, the method further includes:
determining time domain configuration information of a sub-band,
where in case that the first configuration information indicates that the symbol category is flexible, the transmission configuration includes:
   in case that the time domain configuration information of the sub-band is carried by a second-type message, the terminal performs flexible transmission on the second resource within the time unit.

In some embodiments, in case that the symbol category is uplink, the terminal does not configure the uplink sub-band within the time unit.

In some embodiments, the first-type message is a radio resource control (RRC) message, or the second-type message is a medium access control-control element (MAC CE) or DCI message.

An embodiment of the present application further provides a method for transmission configuration determination, performed by a network device, including:
determining a symbol category of a time unit; and
determining a transmission configuration on a target resource within the time unit based on the symbol category.

In some embodiments, the target resource includes one or more of the following resources:
a first resource, where the first resource is an uplink sub-band; or
a second resource, where the second resource is a sub-band other than an uplink sub-band within a bandwidth part range; or the second resource is a sub-band other than an uplink sub-band and a guard band within a bandwidth part range.

In some embodiments, in case that the symbol category is downlink, the transmission configuration includes one or more of the following:
a terminal performs uplink transmission on the first resource within the time unit;
a terminal performs downlink reception on the second resource within the time unit; or
a terminal does not perform uplink transmission on the second resource within the time unit.

In some embodiments, the symbol category indication information includes one or more of the following:
first configuration information, where the first configuration information includes time division duplex uplink-downlink configuration common information and/or time division duplex uplink-downlink configuration dedicated information; or
second configuration information, where the second configuration information includes slot format indicator information in downlink control information (DCI) format 2-0.

In some embodiments, the method further includes:
determining time domain configuration information of a sub-band,
where in case that the first configuration information indicates that the symbol category is downlink, the transmission configuration includes one or more of the following:
   in case that the time domain configuration information of the sub-band is carried by a second-type message, a terminal does not perform downlink reception on the first resource within the time unit;
   in case that the time domain configuration information of the sub-band is carried by a first-type message, a terminal does not perform downlink reception on the first resource within the time unit; or
   in case that the time domain configuration information of the sub-band is carried by a first-type message, a terminal performs downlink reception on the first resource within the time unit.

In some embodiments, in case that the first configuration information indicates that the symbol category is flexible and the second configuration information indicates that the symbol category is downlink, the transmission configuration includes one of the following:
a terminal performs downlink reception on the first resource within the time unit; or
a terminal does not perform downlink reception on the first resource within the time unit.

In some embodiments, the method further includes:
determining time domain configuration information of a sub-band,
where in case that the first configuration information indicates that the symbol category is flexible, or in case that the second configuration information indicates that the symbol category is flexible, the transmission configuration includes one or more of the following:
   in case that the time domain configuration information of the sub-band is carried by a second-type message, a terminal performs uplink transmission on the first resource within the time unit;
   in case that the time domain configuration information of the sub-band is carried by a second-type message, a terminal does not perform downlink reception on the first resource within the time unit;
   in case that the time domain configuration information of the sub-band is carried by a second-type message, a terminal performs downlink reception on the second resource within the time unit;
   in case that the time domain configuration information of the sub-band is carried by a first-type message, a terminal performs uplink transmission on the first resource within the time unit;
   in case that the time domain configuration information of the sub-band is carried by a first-type message, a terminal does not perform downlink reception on the first resource within the time unit;
   in case that the time domain configuration information of the sub-band is carried by a first-type message, a terminal performs downlink reception on the second resource within the time unit;
   in case that the time domain configuration information of the sub-band is carried by a first-type message, a terminal performs flexible transmission on the first resource within the time unit; or
   in case that the time domain configuration information of the sub-band is carried by a first-type message, a terminal performs flexible transmission on the second resource within the time unit.

In some embodiments, the method further includes:
determining time domain configuration information of a sub-band,
where in case that the first configuration information indicates that the symbol category is flexible, the transmission configuration includes:
   in case that the time domain configuration information of the sub-band is carried by a second-type message, a terminal performs flexible transmission on the second resource within the time unit.

In some embodiments, in case that the symbol category is uplink, a terminal does not configure the uplink sub-band within the time unit.

An embodiment of the present application provides a terminal, including a memory, a transceiver and a processor,
where the memory is used for storing a computer program, the transceiver is used for receiving and sending data under control of the processor; and the processor is used for reading the computer program in the memory and performing the following operations:
determining a symbol category of a time unit based on symbol category indication information; and
determining a transmission configuration on a target resource within the time unit based on the symbol category.

In some embodiments, the target resource includes one or more of the following resources:
a first resource, where the first resource is an uplink sub-band; or
a second resource, where the second resource is a sub-band other than an uplink sub-band within a bandwidth part range; or the second resource is a sub-band other than an uplink sub-band and a guard band within a bandwidth part range.

In some embodiments, in case that the symbol category is downlink, the transmission configuration includes one or more of the following:
the terminal performs uplink transmission on the first resource within the time unit;
the terminal performs downlink reception on the second resource within the time unit; or
the terminal does not perform uplink transmission on the second resource within the time unit.

In some embodiments, the symbol category indication information includes one or more of the following:
first configuration information, where the first configuration information includes time division duplex uplink-downlink configuration common information and/or time division duplex uplink-downlink configuration dedicated information; or
second configuration information, where the second configuration information includes slot format indicator information in downlink control information (DCI) format 2-0.

In some embodiments, the processor is further used for reading the computer in the memory and performing the following operations:
determining time domain configuration information of a sub-band,
where in case that the first configuration information indicates that the symbol category is downlink, the transmission configuration includes one or more of the following:
   in case that the time domain configuration information of the sub-band is carried by a second-type message, the terminal does not perform downlink reception on the first resource within the time unit;
   in case that the time domain configuration information of the sub-band is carried by a first-type message, the terminal does not perform downlink reception on the first resource within the time unit; or
   in case that the time domain configuration information of the sub-band is carried by a first-type message, the terminal performs downlink reception on the first resource within the time unit.

In some embodiments, in case that the first configuration information indicates that the symbol category is flexible and the second configuration information indicates that the symbol category is downlink, the transmission configuration includes one of the following:
the terminal performs downlink reception on the first resource within the time unit; or
the terminal does not perform downlink reception on the first resource within the time unit.

In some embodiments, the processor is further used for reading the computer in the memory and performing the following operations:
determining time domain configuration information of a sub-band,
where in case that the first configuration information indicates that the symbol category is flexible, or in case that the second configuration information indicates that the symbol category is flexible, the transmission configuration includes one or more of the following:
   in case that the time domain configuration information of the sub-band is carried by a second-type message, the terminal performs uplink transmission on the first resource within the time unit;
   in case that the time domain configuration information of the sub-band is carried by a second-type message, the terminal does not perform downlink reception on the first resource within the time unit;
   in case that the time domain configuration information of the sub-band is carried by a second-type message, the terminal performs downlink reception on the second resource within the time unit;
   in case that the time domain configuration information of the sub-band is carried by a first-type message, the terminal performs uplink transmission on the first resource within the time unit;
   in case that the time domain configuration information of the sub-band is carried by a first-type message, the terminal does not perform downlink reception on the first resource within the time unit;
   in case that the time domain configuration information of the sub-band is carried by a first-type message, the terminal performs downlink reception on the second resource within the time unit;
   in case that the time domain configuration information of the sub-band is carried by a first-type message, the terminal performs flexible transmission on the first resource within the time unit; or
   in case that the time domain configuration information of the sub-band is carried by a first-type message, the terminal performs flexible transmission on the second resource within the time unit.

In some embodiments, the processor is further used for reading the computer in the memory and performing the following operations:
determining time domain configuration information of a sub-band,
where in case that the first configuration information indicates that the symbol category is flexible, the transmission configuration includes:
   in case that the time domain configuration information of the sub-band is carried by a second-type message, the terminal performs flexible transmission on the second resource within the time unit.

In some embodiments, in case that the symbol category is uplink, the terminal does not configure the uplink sub-band within the time unit.

In some embodiments, the first-type message is a radio resource control (RRC) message, or the second-type message is a medium access control-control element (MAC CE) or DCI message.

An embodiment of the present application further provides a network device, including a memory, a transceiver and a processor,
where the memory is used for storing a computer program, the transceiver is used for receiving and sending data under control of the processor; and the processor is used for reading the computer program in the memory and performing the following operations:
determining a symbol category of a time unit; and
determining a transmission configuration on a target resource within the time unit based on the symbol category.

In some embodiments, the target resource includes one or more of the following resources:
a first resource, where the first resource is an uplink sub-band; or
a second resource, where the second resource is a sub-band other than an uplink sub-band within a bandwidth part range; or the second resource is a sub-band other than an uplink sub-band and a guard band within a bandwidth part range.

In some embodiments, in case that the symbol category is downlink, the transmission configuration includes one or more of the following:
a terminal performs uplink transmission on the first resource within the time unit;
a terminal performs downlink reception on the second resource within the time unit; or
a terminal does not perform uplink transmission on the second resource within the time unit.

In some embodiments, the symbol category indication information includes one or more of the following:
first configuration information, where the first configuration information includes time division duplex uplink-downlink configuration common information and/or time division duplex uplink-downlink configuration dedicated information; or
second configuration information, where the second configuration information includes slot format indicator information in downlink control information (DCI) format 2-0.

In some embodiments, the processor is further used for reading the computer in the memory and performing the following operations:
determining time domain configuration information of a sub-band,
where in case that the first configuration information indicates that the symbol category is downlink, the transmission configuration includes one or more of the following:
   in case that the time domain configuration information of the sub-band is carried by a second-type message, a terminal does not perform downlink reception on the first resource within the time unit;
   in case that the time domain configuration information of the sub-band is carried by a first-type message, a terminal does not perform downlink reception on the first resource within the time unit; or
   in case that the time domain configuration information of the sub-band is carried by a first-type message, a terminal performs downlink reception on the first resource within the time unit.

In some embodiments, in case that the first configuration information indicates that the symbol category is flexible and the second configuration information indicates that the symbol category is downlink, the transmission configuration includes one of the following:
a terminal performs downlink reception on the first resource within the time unit; or
a terminal does not perform downlink reception on the first resource within the time unit.

In some embodiments, the processor is further used for reading the computer in the memory and performing the following operations:
determining time domain configuration information of a sub-band,
where in case that the first configuration information indicates that the symbol category is flexible, or in case that the second configuration information indicates that the symbol category is flexible, the transmission configuration includes one or more of the following:
   in case that the time domain configuration information of the sub-band is carried by a second-type message, a terminal performs uplink transmission on the first resource within the time unit;
   in case that the time domain configuration information of the sub-band is carried by a second-type message, a terminal does not perform downlink reception on the first resource within the time unit;
   in case that the time domain configuration information of the sub-band is carried by a second-type message, a terminal performs downlink reception on the second resource within the time unit;
   in case that the time domain configuration information of the sub-band is carried by a first-type message, a terminal performs uplink transmission on the first resource within the time unit;
   in case that the time domain configuration information of the sub-band is carried by a first-type message, a terminal does not perform downlink reception on the first resource within the time unit;
   in case that the time domain configuration information of the sub-band is carried by a first-type message, a terminal performs downlink reception on the second resource within the time unit;
   in case that the time domain configuration information of the sub-band is carried by a first-type message, a terminal performs flexible transmission on the first resource within the time unit; or
   in case that the time domain configuration information of the sub-band is carried by a first-type message, a terminal performs flexible transmission on the second resource within the time unit.

In some embodiments, the processor is further used for reading the computer in the memory and performing the following operations:
determining time domain configuration information of a sub-band,
where in case that the first configuration information indicates that the symbol category is flexible, the transmission configuration includes:
   in case that the time domain configuration information of the sub-band is carried by a second-type message, a terminal performs flexible transmission on the second resource within the time unit.

In some embodiments, in case that the symbol category is uplink, a terminal does not configure the uplink sub-band within the time unit.

An embodiment of the present application provides an apparatus for transmission configuration determination, including:
a first determining module, used for determining a symbol category of a time unit based on symbol category indication information; and
a second determining module, used for determining a transmission configuration on a target resource within the time unit based on the symbol category.

In some embodiments, the target resource includes one or more of the following resources:
a first resource, where the first resource is an uplink sub-band; or
a second resource, where the second resource is a sub-band other than an uplink sub-band within a bandwidth part range; or the second resource is a sub-band other than an uplink sub-band and a guard band within a bandwidth part range.

In some embodiments, in case that the symbol category is downlink, the transmission configuration includes one or more of the following:
a terminal performs uplink transmission on the first resource within the time unit;
a terminal performs downlink reception on the second resource within the time unit; or
a terminal does not perform uplink transmission on the second resource within the time unit.

In some embodiments, the symbol category indication information includes one or more of the following:
first configuration information, where the first configuration information includes time division duplex uplink-downlink configuration common information and/or time division duplex uplink-downlink configuration dedicated information; or
second configuration information, where the second configuration information includes slot format indicator information in downlink control information (DCI) format 2-0.

In some embodiments, the apparatus further includes:
a fifth determining module, used for determining time domain configuration information of a sub-band,
where in case that the first configuration information indicates that the symbol category is downlink, the transmission configuration includes one or more of the following:
   in case that the time domain configuration information of the sub-band is carried by a second-type message, a terminal does not perform downlink reception on the first resource within the time unit;
   in case that the time domain configuration information of the sub-band is carried by a first-type message, a terminal does not perform downlink reception on the first resource within the time unit; or
   in case that the time domain configuration information of the sub-band is carried by a first-type message, a terminal performs downlink reception on the first resource within the time unit.

In some embodiments, in case that the first configuration information indicates that the symbol category is flexible and the second configuration information indicates that the symbol category is downlink, the transmission configuration includes one of the following:
a terminal performs downlink reception on the first resource within the time unit; or
a terminal does not perform downlink reception on the first resource within the time unit.

In some embodiments, the apparatus further includes:
a sixth determining module, used for determining time domain configuration information of a sub-band,
where in case that the first configuration information indicates that the symbol category is flexible, or in case that the second configuration information indicates that the symbol category is flexible, the transmission configuration includes one or more of the following:
   in case that the time domain configuration information of the sub-band is carried by a second-type message, a terminal performs uplink transmission on the first resource within the time unit;
   in case that the time domain configuration information of the sub-band is carried by a second-type message, a terminal does not perform downlink reception on the first resource within the time unit;
   in case that the time domain configuration information of the sub-band is carried by a second-type message, a terminal performs downlink reception on the second resource within the time unit;
   in case that the time domain configuration information of the sub-band is carried by a first-type message, a terminal performs uplink transmission on the first resource within the time unit;
   in case that the time domain configuration information of the sub-band is carried by a first-type message, a terminal does not perform downlink reception on the first resource within the time unit;
   in case that the time domain configuration information of the sub-band is carried by a first-type message, a terminal performs downlink reception on the second resource within the time unit;
   in case that the time domain configuration information of the sub-band is carried by a first-type message, a terminal performs flexible transmission on the first resource within the time unit; or
   in case that the time domain configuration information of the sub-band is carried by a first-type message, a terminal performs flexible transmission on the second resource within the time unit.

In some embodiments, the apparatus further includes:
a seventh determining module, used for determining time domain configuration information of a sub-band,
where in case that the first configuration information indicates that the symbol category is flexible, the transmission configuration includes:
   in case that the time domain configuration information of the sub-band is carried by a second-type message, a terminal performs flexible transmission on the second resource within the time unit.

In some embodiments, in case that the symbol category is uplink, a terminal does not configure the uplink sub-band within the time unit.

In some embodiments, the first-type message is a radio resource control (RRC) message, or the second-type message is a medium access control-control element (MAC CE) or DCI message.

An embodiment of the present application further provides an apparatus for transmission configuration determination, including:
a third determining module, used for determining a symbol category of a time unit; and
a fourth determining module, used for determining a transmission configuration on a target resource within the time unit based on the symbol category.

In some embodiments, the target resource includes one or more of the following resources:
a first resource, where the first resource is an uplink sub-band; or
a second resource, where the second resource is a sub-band other than an uplink sub-band within a bandwidth part range; or the second resource is a sub-band other than an uplink sub-band and a guard band within a bandwidth part range.

In some embodiments, in case that the symbol category is downlink, the transmission configuration includes one or more of the following:
a terminal performs uplink transmission on the first resource within the time unit;
a terminal performs downlink reception on the second resource within the time unit; or
a terminal does not perform uplink transmission on the second resource within the time unit.

In some embodiments, the symbol category indication information includes one or more of the following:
first configuration information, where the first configuration information includes time division duplex uplink-downlink configuration common information and/or time division duplex uplink-downlink configuration dedicated information; or
second configuration information, where the second configuration information includes slot format indicator information in downlink control information (DCI) format 2-0.

In some embodiments, the apparatus further includes:
an eighth determining module, used for determining time domain configuration information of a sub-band,
where in case that the first configuration information indicates that the symbol category is downlink, the transmission configuration includes one or more of the following:
   in case that the time domain configuration information of the sub-band is carried by a second-type message, a terminal does not perform downlink reception on the first resource within the time unit;
   in case that the time domain configuration information of the sub-band is carried by a first-type message, a terminal does not perform downlink reception on the first resource within the time unit; or
   in case that the time domain configuration information of the sub-band is carried by a first-type message, a terminal performs downlink reception on the first resource within the time unit.

In some embodiments, in case that the first configuration information indicates that the symbol category is flexible and the second configuration information indicates that the symbol category is downlink, the transmission configuration includes one of the following:
a terminal performs downlink reception on the first resource within the time unit; or
a terminal does not perform downlink reception on the first resource within the time unit.

In some embodiments, the apparatus further includes:
a ninth determining module, used for determining time domain configuration information of a sub-band,
where in case that the first configuration information indicates that the symbol category is flexible, or in case that the second configuration information indicates that the symbol category is flexible, the transmission configuration includes one or more of the following:
   in case that the time domain configuration information of the sub-band is carried by a second-type message, a terminal performs uplink transmission on the first resource within the time unit;
   in case that the time domain configuration information of the sub-band is carried by a second-type message, a terminal does not perform downlink reception on the first resource within the time unit;
   in case that the time domain configuration information of the sub-band is carried by a second-type message, a terminal performs downlink reception on the second resource within the time unit;
   in case that the time domain configuration information of the sub-band is carried by a first-type message, a terminal performs uplink transmission on the first resource within the time unit;
   in case that the time domain configuration information of the sub-band is carried by a first-type message, a terminal does not perform downlink reception on the first resource within the time unit;
   in case that the time domain configuration information of the sub-band is carried by a first-type message, a terminal performs downlink reception on the second resource within the time unit;
   in case that the time domain configuration information of the sub-band is carried by a first-type message, a terminal performs flexible transmission on the first resource within the time unit; or
   in case that the time domain configuration information of the sub-band is carried by a first-type message, a terminal performs flexible transmission on the second resource within the time unit.

In some embodiments, the apparatus further includes:
a tenth determining module, used for determining time domain configuration information of a sub-band,
where in case that the first configuration information indicates that the symbol category is flexible, the transmission configuration includes:
   in case that the time domain configuration information of the sub-band is carried by a second-type message, a terminal performs flexible transmission on the second resource within the time unit.

In some embodiments, in case that the symbol category is uplink, a terminal does not configure the uplink sub-band within the time unit.

An embodiment of the present application further provides a processor-readable storage medium, where the processor-readable storage medium stores a computer program, and the computer program is used to cause a processor to perform any of the methods for transmission configuration determination as described above.

An embodiment of the present application further provides a computer-readable storage medium, where the computer-readable storage medium stores a computer program, and the computer program is used to cause a computer to perform any of the methods for transmission configuration determination as described above.

An embodiment of the present application further provides a communication device-readable storage medium, where the communication device-readable storage medium stores a computer program, and the computer program is used to cause a communication device to perform any of the methods for transmission configuration determination as described above.

An embodiment of the present application further provides a chip product-readable storage medium, where the chip product-readable storage medium stores a computer program, and the computer program is used to cause a chip product to perform any of the methods for transmission configuration determination as described above.

In the methods and apparatuses for transmission configuration determination, and the storage mediums provided by the embodiments of the present application, the symbol category of the time unit is determined, and the transmission direction on each frequency domain resource within the time unit is determined based on the symbol category. Therefore, a transmission direction on each frequency domain resource within the time unit is determined.

### BRIEF DESCRIPTION OF THE DRAWINGS

In order to illustrate solutions disclosed in the embodiments of the present application more clearly, drawings used in the description of the embodiments are briefly described below. The drawings in the following description are only some embodiments of the present application, and other drawings may be obtained according to these drawings without any creative work for those skilled in the art.
FIG. 1 is a first schematic flowchart of a method for transmission configuration determination according to an embodiment of the present application;
FIG. 2 is a second schematic flowchart of a method for transmission configuration determination according to an embodiment of the present application;
FIG. 3 is a schematic structural diagram of a terminal according to an embodiment of the present application;
FIG. 4 is a schematic structural diagram of a network device according to an embodiment of the present application;
FIG. 5 is a first schematic structural diagram of an apparatus for transmission configuration determination according to an embodiment of the present application; and
FIG. 6 is a second schematic structural diagram of an apparatus for transmission configuration determination according to an embodiment of the present application.

### DETAILED DESCRIPTION

In R15, R16 and R17 versions of the protocol, a network configures types of a transmission direction on a slot or a symbol through a time division duplex uplink-downlink configuration common signaling (*tdd-UL-DL-configurationCommon*) in a system information block (SIB1), which include an uplink type, a downlink type and a flexible type, and symbol categories corresponding to these three types are U, D and F. The network may also configure a dedicated terminal/user equipment (UE) through a time division duplex uplink-downlink configuration dedicated signaling (*tdd-UL-DL-ConfigurationDedicated*), and configure a symbol with a cell-level symbol category being F type as uplink or downlink. The network may also dynamically indicate an uplink-downlink direction through downlink control information format 2_0 (DCI format 2_0). Similarly, DCI format 2_0 can only configure a symbol with a symbol category being F in a signaling being *tdd-UL-DL-configurationCommon* or a signaling being *tdd-UL-DL-ConfigurationDedicated* as uplink or downlink.

Therefore, in a traditional system, a base station may only configure *tdd-UL-DL-configurationCommon*, and the UE determines types of a transmission direction on a slot or a symbol based on *tdd-UL-DL-configurationCommon*; or the base station configures *tdd-UL-DL-configurationCommon* and *tdd-UL-DL-ConfigurationDedicated*, and the UE determines types of a transmission direction on a slot or a symbol based on *tdd-UL-DL-configurationCommon* and *tdd-UL-DL-ConfigurationDedicated*; or the base station configures *tdd-UL-DL-configurationCommon* and DCI format2_0, and the UE determines types of a transmission direction on a slot or a symbol based on *tdd-UL-DL-configurationCommon* and DCI format2_0; or the base station configures *tdd-UL-DL-configurationCommon, tdd-UL-DL-ConfigurationDedicated* and DCI format2_0, and the UE determines types of a transmission direction on a slot or a symbol based on *tdd-UL-DL-configurationCommon* and DCI format2_0.

However, in the related art, only a network side or a base station side has a capability to perform sending and reception simultaneously (referred to as a duplex capability), that is, the base station performs uplink transmission and downlink transmission with different UEs simultaneously. The UE side does not have a duplex capability, that is, the UE can only perform uplink transmission or perform downlink reception at a certain time, frequency domain resources in each time unit are not divided, and a transmission direction on each sub-band is not configured. Therefore, in the related art, the transmission direction on each frequency domain resource within each time unit cannot be determined.

Based on the above problems, an embodiment of the present application provides a method for transmission configuration determination, which determines a symbol category of a time unit and determines a transmission configuration of each frequency domain resource part within the time unit based on the symbol category, to determine a transmission direction of each frequency domain resource part within each time unit.

To make objectives, solutions and advantages of the embodiments of the present application clearer, solutions in embodiments of the present application are clearly and completely described in the following with reference to the accompanying drawings in the embodiments of the present application. These embodiments are only a part of the embodiments of the present application, and not all of the embodiments. All other embodiments obtained by a person of skill in the art based on the embodiments of the present application without any creative work belong to the scope of the present application.

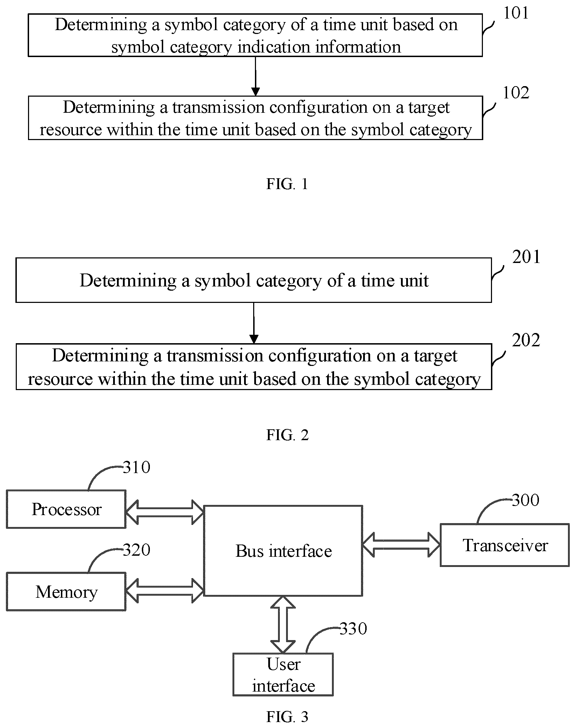

FIG. 1 is a first schematic flowchart of a method for transmission configuration determination according to an embodiment of the present application. As shown in FIG. 1, an embodiment of the present application provides a method for transmission configuration determination, performed by a terminal, such as a mobile phone, etc. The method includes the following steps.

Step 101: determining a symbol category of a time unit based on symbol category indication information.

In an embodiment, a network or a base station sends symbol category indication information to the terminal, where the symbol category indication information indicates that a symbol category of a time unit is U (uplink), D (downlink) or F (flexible). The terminal receives the symbol category indication information and determines the symbol category of the time unit. The symbol category indication information may be time division duplex uplink and downlink common configuration information, or time division duplex uplink-downlink configuration dedicated information, or slot format indicator information, or other information that can indicate the symbol category. A terminal device determines the symbol category of the time unit based on one or more pieces of the above information that is configured and/or received. The time unit may be a frame, a sub-frame, a slot or a symbol.

Step 102: determining a transmission configuration on a target resource within the time unit based on the symbol category.

In an embodiment, the transmission configuration on the target resource within the time unit is determined based on the symbol category of the time unit, where the target resource is multiple frequency domain resource parts divided within the time unit; and the transmission configuration is a configuration of a transmission direction on each part of the frequency domain resource within the time unit.

In some embodiments, the target resource includes one or more of the following resources:
a first resource, where the first resource is an uplink sub-band; or
a second resource, where the second resource is a sub-band other than an uplink sub-band within a bandwidth part range; or the second resource is a sub-band other than an uplink sub-band and a guard band within a bandwidth part range.

In an embodiment, the target resource may include one or more of the following sub-bands: an uplink sub-band, a sub-band other than an uplink sub-band within a bandwidth part range, or a sub-band other than an uplink sub-band and a guard band within a bandwidth part range. Frequency domain resources within the time unit are divided into a first resource and a second resource, where the first resource is an uplink sub-band; and the second resource is a sub-band other than an uplink sub-band within a bandwidth part range, or the second resource is a sub-band other than an uplink sub-band and a guard band within a bandwidth part range.

For example, carrier resource block (CRB) indexes corresponding to the first resource are 10 to 20, and CRB indexes corresponding to the bandwidth part (BWP) are 0 to 49. At this time, CRB indexes included in the second resource are 0 to 9 and 21 to 49.

For another example, CRB indexes corresponding to the first resource are 0 to 10, CRB indexes corresponding to the guard band are 11 to 15, and CRB indexes corresponding to the BWP are 0 to 49. At this time, CRB indexes included in the second resource are 16 to 49.

In some embodiments, in case that the symbol category is downlink, the transmission configuration includes one or more of the following:
the terminal performs uplink transmission on the first resource within the time unit;
the terminal performs downlink reception on the second resource within the time unit; or
the terminal does not perform uplink transmission on the second resource within the time unit.

In an embodiment, in case that the terminal determines that the symbol category of the time unit is D (downlink), the transmission configuration includes one or more of the following: the terminal performs uplink transmission on the uplink sub-band within the time unit; the terminal performs downlink reception on the second resource within the time unit; or, the terminal does not perform uplink transmission on the second resource within the time unit. In an embodiment, "the terminal performs uplink transmission on the first resource within the time unit" may be understood as "the terminal can perform uplink transmission on the first resource within the time unit", and whether the terminal performs uplink transmission on the first resource within the time unit depends on scheduling of the base station; may be understood as "the terminal is expected to perform uplink transmission on the first resource within the time unit"; or may be understood as "the terminal is required to perform uplink transmission on the first resource within the time unit".

In an embodiment, "the terminal performs downlink reception on the second resource within the time unit" may be understood as "the terminal can perform downlink reception on the second resource within the time unit", and whether the terminal performs downlink reception on the second resource within the time unit depends on scheduling of the base station; may be understood as "the terminal is expected to perform downlink reception on the second resource within the time unit"; or may be understood as "the terminal is required to perform downlink reception on the second resource within the time unit".

In an embodiment, "the terminal does not perform uplink transmission on the second resource within the time unit" may be understood as "the terminal cannot perform uplink transmission on the second resource within the time unit"; may be understood as "the terminal is not expected to perform uplink transmission on the second resource within the time unit"; or may be understood as "the terminal is not required to perform uplink transmission on the second resource within the time unit". In some embodiments, the symbol category indication information includes one or more of the following:
first configuration information, where the first configuration information includes time division duplex uplink-downlink configuration common information and/or time division duplex uplink-downlink configuration dedicated information; or
second configuration information, where the second configuration information includes slot format indicator information in downlink control information (DCI) format 2-0.

In an embodiment, the symbol category of the time unit may be indicated by time division duplex uplink-downlink configuration common (TDD-UL-DL-ConfigCommon) information and/or time division duplex uplink-downlink configuration dedicated (TDD-UL-DL-ConfigDedicated) information; or, indicated by time division duplex uplink-downlink configuration common information and/or time division duplex uplink-downlink configuration dedicated information, and slot format indicator (SFI) information in DCI format 2-0.

For example, in case that TDD-UL-DL-ConfigCommon indicates that the symbol category is D, it may be determined that the symbol category of the corresponding time unit is D.

In case that TDD-UL-DL-ConfigDedicated indicates that the symbol category is D, it may be determined that the symbol category of the corresponding time unit is D.

In case that both TDD-UL-DL-ConfigCommon and TDD-UL-DL-ConfigDedicated indicate that the symbol category is D, it may be determined that the symbol category of the corresponding time unit is D.

For another example, in case that TDD-UL-DL-ConfigCommon and/or TDD-UL-DL-ConfigDedicated indicates that the symbol category is F and an SFI indicates that the symbol category is D, it may be determined that the symbol category of the corresponding time unit is D.

In case that the SFI indicates that the symbol category is F, it may be determined that the symbol category of the corresponding time unit is F.

In some embodiments, the method further includes:
determining time domain configuration information of a sub-band,
where in case that the first configuration information indicates that the symbol category is downlink, the transmission configuration includes one or more of the following:
   in case that the time domain configuration information of the sub-band is carried by a second-type message, the terminal does not perform downlink reception on the first resource within the time unit;
   in case that the time domain configuration information of the sub-band is carried by a first-type message, the terminal does not perform downlink reception on the first resource within the time unit; or
   in case that the time domain configuration information of the sub-band is carried by a first-type message, the terminal performs downlink reception on the first resource within the time unit.

The UE performing downlink reception on an uplink sub-band includes the following two meanings: resources for downlink transmission partially overlap with an uplink (UL) sub-band, and/or all uplink sub-bands are used for downlink transmission.

For example, after the terminal determines the symbol category of the time unit based on the symbol category indication information, it is also required to determine the time domain configuration information of the sub-band, and learn which type of message the time domain configuration information of the sub-band is carried by. In case that the time domain configuration information is carried by different messages, states of the time domain configuration of the sub-band are different. For example, in case that the time domain configuration information is carried by a radio resource control (RRC) message, the time domain configuration of the sub-band is a semi-static configuration; in case that the time domain configuration information is carried by a medium access control-control element (MAC CE) or DCI message, the time domain configuration of the sub-band is a dynamic configuration. Different time domain configurations of the sub-band affect a transmission direction on a frequency domain resource within the time unit. For example, the transmission configuration includes one or more of the following: in case that the time domain configuration information of the sub-band is carried by the MAC CE or DCI message, the terminal does not perform downlink reception on the first resource within the time unit; or, in case that the time domain configuration information of the sub-band is carried by the RRC message, the terminal is predefined to perform downlink reception on the first resource within the time unit, or the terminal is predefined not to perform downlink reception on the first resource within the time unit.

For example, the protocol only specifies one carrying mode for the time domain configuration information of the sub-band, such as carrying through the RRC message or carrying through the MAC CE message, or carrying through the DCI message, and the transmission configuration is determined based on the corresponding carrying mode.

In some embodiments, in case that the first configuration information indicates that the symbol category is flexible and the second configuration information indicates that the symbol category is downlink, the transmission configuration includes one of the following:
the terminal performs downlink reception on the first resource within the time unit; or
the terminal does not perform downlink reception on the first resource within the time unit.

In an embodiment, in case that the first configuration information indicates that the symbol category of the time unit is F (flexible), and the second configuration information indicates that the symbol category is D (downlink), the time unit is indicated as D, and the terminal performs downlink reception on the first resource within the time unit. For example, the base station first configures an uplink sub-band for the UE, and an SFI may be used to indicate deactivation of a configured uplink sub-band, and the time unit is indicated as D. For another example, in case that the base station first configures an SFI, and the SFI indicates D, the UE no longer configures the uplink sub-band within the time unit.

Or, in case that the first configuration information indicates that the symbol category of the time unit is F, and the second configuration information indicates that the symbol category is D, the terminal does not perform downlink reception on the first resource within the time unit. For example, for a UE configured with an uplink sub-band, an SFI can only cover transmission directions on other resources and does not affect configuration of the uplink sub-band. In this case, the UE can still perform uplink transmission on the uplink sub-band and not perform downlink reception on the second resource within the time unit.

The UE performing downlink reception on an uplink sub-band includes the following two meanings: resources for downlink transmission partially overlap with an uplink (UL) sub-band, and/or all uplink sub-bands are used for downlink transmission.

In some embodiments, the method further includes:
determining time domain configuration information of a sub-band,
where in case that the first configuration information indicates that the symbol category is flexible, or in case that the second configuration information indicates that the symbol category is flexible, the transmission configuration includes one or more of the following:
   in case that the time domain configuration information of the sub-band is carried by a second-type message, the terminal performs uplink transmission on the first resource within the time unit;
   in case that the time domain configuration information of the sub-band is carried by a second-type message, the terminal does not perform downlink reception on the first resource within the time unit;
   in case that the time domain configuration information of the sub-band is carried by a second-type message, the terminal performs downlink reception on the second resource within the time unit;
   in case that the time domain configuration information of the sub-band is carried by a first-type message, the terminal performs uplink transmission on the first resource within the time unit;
   in case that the time domain configuration information of the sub-band is carried by a first-type message, the terminal does not perform downlink reception on the first resource within the time unit;
   in case that the time domain configuration information of the sub-band is carried by a first-type message, the terminal performs downlink reception on the second resource within the time unit;
   in case that the time domain configuration information of the sub-band is carried by a first-type message, the terminal performs flexible transmission on the first resource within the time unit; or
   in case that the time domain configuration information of the sub-band is carried by a first-type message, the terminal performs flexible transmission on the second resource within the time unit.

For example, in case that the first configuration information indicates that the symbol category is F, or in case that the second configuration information indicates that the symbol category is F, the time domain configuration information of the sub-band is carried by the RRC message, and the transmission direction on the frequency domain resource within the time unit is still F, or the terminal is indicated to deactivate a sub-band configuration at this time.

The UE performing downlink reception on an uplink sub-band includes the following two meanings: resources for downlink transmission partially overlap with an uplink (UL) sub-band, and/or all uplink sub-bands are used for downlink transmission.

In case that the UE has only a dynamic time domain configuration of the sub-band, or only a semi-static time domain configuration of the sub-band, the corresponding transmission configuration is determined based on a time domain configuration type of the sub-band for the UE; and in case that the UE has both configurations, the corresponding transmission configuration is determined based on a time domain configuration type sent from the base station.

In some embodiments, the method further includes:
determining time domain configuration information of a sub-band,
where in case that the first configuration information indicates that the symbol category is flexible, the transmission configuration includes:
   in case that the time domain configuration information of the sub-band is carried by a second-type message, the terminal performs flexible transmission on the second resource within the time unit.

In an embodiment, in case that the symbol category of the time unit is F (flexible) and the time domain configuration information of the sub-band is carried by the second-type message, the transmission direction of the terminal on the second resource within the time unit remains consistent with the symbol category of the time unit, which is still F.

In some embodiments, in case that the symbol category is uplink, the terminal does not configure the uplink sub-band within the time unit.

In an embodiment, in case that the symbol category of the time unit is uplink, the terminal does not configure the uplink sub-band within the time unit, or the terminal ignores an uplink sub-band configuration on the symbol, or the terminal is indicated to deactivate the uplink sub-band.

For example, in the time unit indicated, by TDD-UL-DL-ConfigCommon and TDD-UL-DL-ConfigDedicated, as F, the base station first indicates that the time unit is U through a configured SFI. At this time, the UE does not configure the uplink sub-band within the time unit, and the UE ignores the uplink sub-band configuration; or after the base station configures the uplink sub-band for the UE, the base station may indicate U through the SFI to deactivate the configured uplink sub-band.

In some embodiments, the first-type message is an RRC message, or the second-type message is a MAC CE or DCI message.

In an embodiment, in case that the time domain configuration information of the sub-band is carried by the first-type message, the time domain configuration of the sub-band is a semi-static configuration. In case that the time domain configuration information of the sub-band is carried by the second-type message, the time domain configuration of the sub-band is a dynamic configuration.

In the method for transmission configuration determination provided by the embodiments of the present application, the symbol category of the time unit is determined, and the transmission configuration for each frequency domain resource within the time unit is determined based on the symbol category. Therefore, a transmission direction on each frequency domain resource within the time unit is determined.

The following is a further explanation for the method for transmission configuration determination provided by the above embodiment through specific examples.

### Example 1:

Frequency domain resources within a time unit are divided into an uplink sub-band and other resources, where the other resource is a sub-band other than an uplink sub-band within a bandwidth part range, or the other resource is a sub-band other than an uplink sub-band and a guard band within a bandwidth part range. A transmission configuration on a frequency domain resource within the time unit includes one or more of the following.
1. Within a time unit in which symbol category indication information indicates D, the transmission configuration on the frequency domain resource within the time unit includes one or more of the following:
   a UE performs uplink transmission on the uplink sub-band;
   a UE performs downlink reception on other resources; or
   a UE does not perform uplink transmission on other resources.
2. In case that time division duplex uplink-downlink configuration common (TDD-UL-DL-ConfigCommon) information and/or time division duplex uplink-downlink configuration dedicated (TDD-UL-DL-ConfigDedicated) information indicates D, the transmission configuration on the uplink sub-band for the UE includes one or more of the following.

In case that the time domain configuration of the uplink sub-band is a dynamic configuration, that is, the time domain configuration information of the uplink sub-band is carried by a MAC CE or a DCI message, for example, the time domain configuration of the uplink sub-band is indicated by DCI2-0 or by DCI scheduling uplink transmission or downlink sending, considering that a network can dynamically indicate whether the time unit includes uplink sub-band, it is not required to perform downlink reception on the uplink sub-band to match a network load, and the UE does not perform downlink reception on the uplink sub-band at this time.

In case that the time domain configuration of the uplink sub-band is a semi-static configuration, that is, the time domain configuration information of the uplink sub-band is carried by an RRC message, it may be predefined that the UE performs downlink reception on the uplink sub-band, or it may be predefined that the UE does not perform downlink reception on the uplink sub-band, that is, the standard predefines whether the UE performs downlink reception on the uplink sub-band.

The UE performing downlink reception on an uplink sub-band includes the following two meanings: resources for downlink transmission partially overlap with an uplink (UL) sub-band, and/or all uplink sub-bands are used for downlink transmission.

3. In case that TDD-UL-DL-ConfigCommon and/or TDD-UL-DL-ConfigDedicated indicates F and an SFI indicates D, the transmission configuration of the frequency domain resource within the corresponding time unit is:
the UE performs downlink reception on the uplink sub-band, that is, the time unit is D, for example, in case that a base station first configures the uplink sub-band for the UE, and may deactivate a configured uplink sub-band through an SFI, the time unit is indicated as D; and for another example, in case that the base station first configures an SFI, and the SFI indicates D, the UE no longer supports configuration of the uplink sub-band within the time unit; or
the UE does not perform downlink reception on the uplink sub-band, for example, for a UE configured with an uplink sub-band, an SFI can only cover transmission directions on other resources and does not affect configuration of the uplink (UL) sub-band, and the UE can still perform data transmission on the uplink sub-band.

The UE performing downlink reception on an uplink sub-band includes the following two meanings: resources for downlink transmission partially overlap with an uplink (UL) sub-band, and/or all uplink sub-bands are used for downlink transmission.

In case that the UE/protocol only supports a dynamic time domain configuration, or only supports a semi-static time domain configuration, the corresponding transmission configuration is determined based on a time domain configuration type supported by the UE/protocol; and in case that the UE/protocol supports both configurations, the corresponding transmission configuration is determined based on the time domain configuration type sent from the base station/received by the UE.

### Example 2:

Frequency domain resources within a time unit are divided into an uplink sub-band and other resource, where the other resource is a sub-band other than an uplink sub-band within a bandwidth part range, or the other resource is a sub-band other than an uplink sub-band and a guard band within a bandwidth part range. A transmission configuration on a frequency domain resource within the time unit includes one or more of the following.
1. In case that time division duplex uplink-downlink configuration common (TDD-UL-DL-ConfigCommon) information and/or time division duplex uplink-downlink configuration dedicated (TDD-UL-DL-ConfigDedicated) information indicates F and an SFI is not configured, the transmission configuration on the frequency domain resource within the time unit for a UE includes one or more of the following.

In case that the time domain configuration of the uplink sub-band is a dynamic configuration, that is, the time domain configuration information of the uplink sub-band is carried by a MAC CE or a DCI message, the transmission configuration on the frequency domain resource within the time unit includes one or more of the following:
the UE performs uplink transmission on the uplink sub-band;
the UE does not perform downlink reception on the uplink sub-band; or
the UE performs downlink reception on other resources, that is, other resources of the time unit are predefined to perform downlink reception; or a transmission direction of other resources is still F, and the base station can dynamically schedule uplink transmission or downlink reception on other resources.

In case that the time domain configuration of the uplink sub-band is a semi-static configuration, that is, the time domain configuration information of the uplink sub-band is carried by an RRC message, the transmission configuration on the frequency domain resource within the time unit includes one or more of the following:
a symbol category of the time unit is F, for example, it is predefined that an uplink sub-band configuration within the time unit is not valid, or the UE ignores the uplink sub-band configuration, or the UE does not support configuring of the uplink sub-band, or the symbol category is determined based on TDD-UL-DL-ConfigCommon and/or TDD-UL-DL-ConfigDedicated;
the UE performs uplink transmission on the uplink sub-band, the UE does not perform downlink reception on the uplink sub-band, and the UE performs downlink reception on other resources, that is, at this time, the other resources of the time unit are predefined to perform downlink reception; or
the UE performs uplink transmission on the uplink sub-band, and a transmission direction on other resources remains F.

2. In case that an SFI indicates F, the transmission configuration on the frequency domain resource within the time unit for the UE includes one or more of the following.

In case that the time domain configuration of the uplink sub-band is a dynamic configuration that is, the time domain configuration information of the uplink sub-band is carried by a MAC CE or a DCI message, the transmission configuration on the frequency domain resource within the time unit includes one or more of the following:
the UE performs uplink transmission on the uplink sub-band;
the UE does not perform downlink reception on the uplink sub-band; or
the UE performs downlink reception on other resources, that is, other resources are predefined to perform downlink reception.

In case that the time domain configuration of the uplink sub-band is a semi-static configuration, that is, the time domain configuration information of the uplink sub-band is carried by an RRC message, the transmission configuration on the frequency domain resource within the time unit includes one or more of the following:
the UE performs uplink transmission on the uplink sub-band;
the UE does not perform downlink reception on the uplink sub-band; or
the UE performs downlink reception on other resources, that is, other resources are predefined for downlink reception.

A symbol category of the time unit is F. For example, the base station first configures an uplink sub-band for the UE within the time unit, and then configures to deactivate the uplink sub-band through an SFI, that is, falls back to the F type.

In case that the UE/protocol only supports a dynamic time domain configuration, or only supports a semi-static time domain configuration, the corresponding transmission configuration is determined based on a time domain configuration type supported by the UE/protocol; and in case that the UE/protocol supports both configurations, the corresponding transmission configuration is determined based on the time domain configuration type sent from the base station/received by the UE.

### Example 3:

Frequency domain resources within a time unit are divided into an uplink sub-band and other resource, where the other resource is a sub-band other than an uplink sub-band within a bandwidth part range, or the other resource is a sub-band other than an uplink sub-band and a guard band within a bandwidth part range. Within a time unit where symbol category indication information indicates U (uplink), a transmission configuration on a frequency domain resource within the time unit is:
a UE does not support configuration of the uplink sub-band, or the UE ignores an uplink sub-band configuration on the symbol, or a terminal is indicated to deactivate the uplink sub-band.

For example, in the time unit indicated, by TDD-UL-DL-ConfigCommon and TDD-UL-DL-ConfigDedicated, as F, the base station first indicates that the time unit is U through a configured SFI. At this time, the UE does not configure the uplink sub-band within the time unit, and the UE ignores the uplink sub-band configuration; or after the base station configures the uplink sub-band for the UE, the base station may indicate U through the SFI to deactivate the configured uplink sub-band.

In the methods and apparatuses for transmission configuration determination, and the storage mediums provided by the embodiments of the present application, the symbol category of the time unit is determined, and the transmission configuration on each frequency domain resource within the time unit is determined based on the symbol category. Therefore, a transmission direction on each frequency domain resource within the time unit is determined.

FIG. 2 is a second schematic flowchart of a method for transmission configuration determination according to an embodiment of the present application. As shown in FIG. 2, an embodiment of the present application provides a method for transmission configuration determination, performed by a network device, such as a base station, etc. The method includes the following steps.

Step 201: determining a symbol category of a time unit.

Step 202: determining a transmission configuration on a target resource within the time unit based on the symbol category.

In some embodiments, the target resource includes one or more of the following resources:
a first resource, where the first resource is an uplink sub-band; or
a second resource, where the second resource is a sub-band other than an uplink sub-band within a bandwidth part range; or the second resource is a sub-band other than an uplink sub-band and a guard band within a bandwidth part range.

In some embodiments, in case that the symbol category is downlink, the transmission configuration includes one or more of the following:
a terminal performs uplink transmission on the first resource within the time unit;
a terminal performs downlink reception on the second resource within the time unit; or
a terminal does not perform uplink transmission on the second resource within the time unit.

In some embodiments, the symbol category indication information includes one or more of the following:
first configuration information, where the first configuration information includes time division duplex uplink-downlink configuration common information and/or time division duplex uplink-downlink configuration dedicated information; or
second configuration information, where the second configuration information includes slot format indicator information in downlink control information (DCI) format 2-0.

In some embodiments, the method further includes:
determining time domain configuration information of a sub-band,
where in case that the first configuration information indicates that the symbol category is downlink, the transmission configuration includes one or more of the following:
   in case that the time domain configuration information of the sub-band is carried by a second-type message, a terminal does not perform downlink reception on the first resource within the time unit;
   in case that the time domain configuration information of the sub-band is carried by a first-type message, a terminal does not perform downlink reception on the first resource within the time unit; or
   in case that the time domain configuration information of the sub-band is carried by a first-type message, a terminal performs downlink reception on the first resource within the time unit.

In some embodiments, in case that the first configuration information indicates that the symbol category is flexible and the second configuration information indicates that the symbol category is downlink, the transmission configuration includes one of the following:
a terminal performs downlink reception on the first resource within the time unit; or
a terminal does not perform downlink reception on the first resource within the time unit.

In some embodiments, the method further includes:
determining time domain configuration information of a sub-band,
where in case that the first configuration information indicates that the symbol category is flexible, or in case that the second configuration information indicates that the symbol category is flexible, the transmission configuration includes one or more of the following:
   in case that the time domain configuration information of the sub-band is carried by a second-type message, a terminal performs uplink transmission on the first resource within the time unit;
   in case that the time domain configuration information of the sub-band is carried by a second-type message, a terminal does not perform downlink reception on the first resource within the time unit;
   in case that the time domain configuration information of the sub-band is carried by a second-type message, a terminal performs downlink reception on the second resource within the time unit;
   in case that the time domain configuration information of the sub-band is carried by a first-type message, a terminal performs uplink transmission on the first resource within the time unit;
   in case that the time domain configuration information of the sub-band is carried by a first-type message, a terminal does not perform downlink reception on the first resource within the time unit;
   in case that the time domain configuration information of the sub-band is carried by a first-type message, a terminal performs downlink reception on the second resource within the time unit;
   in case that the time domain configuration information of the sub-band is carried by a first-type message, a terminal performs flexible transmission on the first resource within the time unit; or
   in case that the time domain configuration information of the sub-band is carried by a first-type message, a terminal performs flexible transmission on the second resource within the time unit.

In some embodiments, the method further includes:
determining time domain configuration information of a sub-band,
where in case that the first configuration information indicates that the symbol category is flexible, the transmission configuration includes:
   in case that the time domain configuration information of the sub-band is carried by a second-type message, a terminal performs flexible transmission on the second resource within the time unit.

In some embodiments, in case that the symbol category is uplink, a terminal does not configure the uplink sub-band within the time unit.

The method for transmission configuration determination provided by the embodiment of the present application may refer to the above-mentioned embodiment of the method for transmission configuration determination performed by a terminal, and may achieve the same effect. The parts and beneficial effects of this embodiment that are the same as the above-mentioned corresponding method embodiments are not described in detail here.

FIG. 3 is a schematic structural diagram of a terminal according to an embodiment of the present application. As shown in FIG. 3, the terminal includes a memory 320, a transceiver 300, and a processor 310,
where the memory 320 is used for storing a computer program, the transceiver 300 is used for receiving and sending data under control of the processor 310; and the processor 310 is used for reading the computer program in the memory 320 and performing the following operations:
determining a symbol category of a time unit based on symbol category indication information; and
determining a transmission configuration on a target resource within the time unit based on the symbol category.

In an embodiment, the transceiver 300 is used for receiving and sending data under control of the processor 310.

In FIG. 3, a bus architecture may include any number of interconnected buses and bridges, which are linked together through various circuits of one or more processors represented by the processor 310 and one or more memories represented by the memory 320. The bus architecture may also link together various other circuits, such as peripherals, voltage regulators, and power management circuits, etc., which are well known in the art, and therefore are not further described in the present application. A bus interface provides an interface. The transceiver 300 may include multiple elements, i.e., including a transmitter and a receiver, units for providing communication with various other devices over transmission media including wireless channels, wired channels, fiber optic cables, and the like. For different user devices, a user interface 330 may also be an interface capable of externally or internally connecting the required device, and the connected device includes, but not limited to, a keypad, a display, a speaker, a microphone, a joystick, and the like.

The processor 310 is responsible for managing a bus architecture and general processing, and the memory 320 may store data used by the processor 310 when performing operations.

In some embodiments, the processor 310 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to perform any of the methods provided by the embodiments of the present application performed by the terminal based on an obtained executable instruction. The processor and the memory may also be arranged physically separately.

In some embodiments, the target resource includes one or more of the following resources:
a first resource, where the first resource is an uplink sub-band; or
a second resource, where the second resource is a sub-band other than an uplink sub-band within a bandwidth part range; or the second resource is a sub-band other than an uplink sub-band and a guard band within a bandwidth part range.

In some embodiments, in case that the symbol category is downlink, the transmission configuration includes one or more of the following:
the terminal performs uplink transmission on the first resource within the time unit;
the terminal performs downlink reception on the second resource within the time unit; or
the terminal does not perform uplink transmission on the second resource within the time unit.

In some embodiments, the symbol category indication information includes one or more of the following:
first configuration information, where the first configuration information includes time division duplex uplink-downlink configuration common information and/or time division duplex uplink-downlink configuration dedicated information; or
second configuration information, where the second configuration information includes slot format indicator information in downlink control information (DCI) format 2-0.

In some embodiments, the processor is further used for reading the computer in the memory and performing the following operations:
determining time domain configuration information of a sub-band,
where in case that the first configuration information indicates that the symbol category is downlink, the transmission configuration includes one or more of the following:
   in case that the time domain configuration information of the sub-band is carried by a second-type message, the terminal does not perform downlink reception on the first resource within the time unit;
   in case that the time domain configuration information of the sub-band is carried by a first-type message, the terminal does not perform downlink reception on the first resource within the time unit; or
   in case that the time domain configuration information of the sub-band is carried by a first-type message, the terminal performs downlink reception on the first resource within the time unit.

In some embodiments, in case that the first configuration information indicates that the symbol category is flexible and the second configuration information indicates that the symbol category is downlink, the transmission configuration includes one of the following:
the terminal performs downlink reception on the first resource within the time unit; or
the terminal does not perform downlink reception on the first resource within the time unit.

In some embodiments, the processor is further used for reading the computer in the memory and performing the following operations:
determining time domain configuration information of a sub-band,
where in case that the first configuration information indicates that the symbol category is flexible, or in case that the second configuration information indicates that the symbol category is flexible, the transmission configuration includes one or more of the following:
   in case that the time domain configuration information of the sub-band is carried by a second-type message, the terminal performs uplink transmission on the first resource within the time unit;
   in case that the time domain configuration information of the sub-band is carried by a second-type message, the terminal does not perform downlink reception on the first resource within the time unit;
   in case that the time domain configuration information of the sub-band is carried by a second-type message, the terminal performs downlink reception on the second resource within the time unit;
   in case that the time domain configuration information of the sub-band is carried by a first-type message, the terminal performs uplink transmission on the first resource within the time unit;
   in case that the time domain configuration information of the sub-band is carried by a first-type message, the terminal does not perform downlink reception on the first resource within the time unit;
   in case that the time domain configuration information of the sub-band is carried by a first-type message, the terminal performs downlink reception on the second resource within the time unit;
   in case that the time domain configuration information of the sub-band is carried by a first-type message, the terminal performs flexible transmission on the first resource within the time unit; or
   in case that the time domain configuration information of the sub-band is carried by a first-type message, the terminal performs flexible transmission on the second resource within the time unit.

In some embodiments, the processor is further used for reading the computer in the memory and performing the following operations:
determining time domain configuration information of a sub-band,
where in case that the first configuration information indicates that the symbol category is flexible, the transmission configuration includes:
   in case that the time domain configuration information of the sub-band is carried by a second-type message, the terminal performs flexible transmission on the second resource within the time unit.

In some embodiments, in case that the symbol category is uplink, the terminal does not configure the uplink sub-band within the time unit.

In some embodiments, the first-type message is a radio resource control (RRC) message, or the second-type message is a medium access control-control element (MAC CE) or DCI message.

The above-mentioned terminal provided by the embodiment of the present application can implement all the method steps implemented by the method embodiment performed by a terminal, and may achieve the same effect. The parts and beneficial effects of this embodiment that are the same as the method embodiment are not described in detail here.

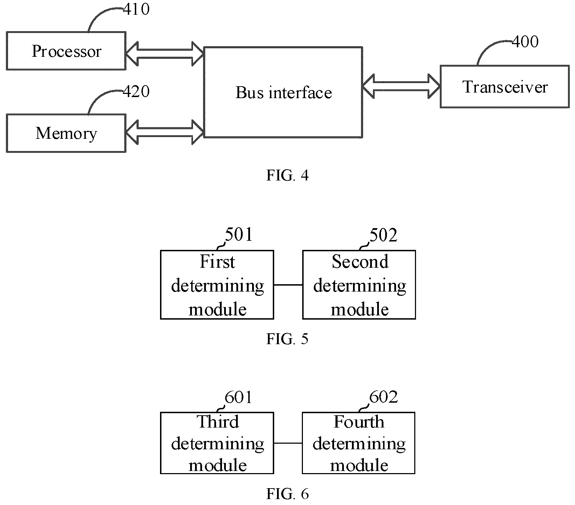

FIG. 4 is a schematic structural diagram of a network device according to an embodiment of the present application. As shown in FIG. 4, the network device includes a memory 420, a transceiver 400 and a processor 410, where the memory 420 is used for storing a computer program, the transceiver 400 is used for receiving and sending data under control of the processor 410; and the processor 410 is used for reading the computer program in the memory 420 and performing the following operations:
determining a symbol category of a time unit; and
determining a transmission configuration on a target resource within the time unit based on the symbol category.

In an embodiment, the transceiver 400 is used for receiving and sending data under control of the processor 410.

In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, etc., which are well known in the art, and therefore are not further described in the present application. A bus interface provides an interface. The transceiver 400 may include multiple elements, i.e., including a transmitter and a receiver, units for providing communication with various other devices over transmission media including wireless channels, wired channels, fiber optic cables, and the like. The processor 410 is responsible for managing the bus architecture and general processing, and the memory 420 may store data used by the processor 410 when performing operations.

The processor 410 may be a central processing unit (CPU), an application specific integrated circuit (ASIC), a field-programmable gate array (FPGA), or a complex programmable logic device (CPLD), the processor may also use a multi-core architecture.

In some embodiments, the target resource includes one or more of the following resources:
a first resource, where the first resource is an uplink sub-band; or
a second resource, where the second resource is a sub-band other than an uplink sub-band within a bandwidth part range; or the second resource is a sub-band other than an uplink sub-band and a guard band within a bandwidth part range.

In some embodiments, in case that the symbol category is downlink, the transmission configuration includes one or more of the following:
a terminal performs uplink transmission on the first resource within the time unit;
a terminal performs downlink reception on the second resource within the time unit; or
a terminal does not perform uplink transmission on the second resource within the time unit.

In some embodiments, the symbol category indication information includes one or more of the following:
first configuration information, where the first configuration information includes time division duplex uplink-downlink configuration common information and/or time division duplex uplink-downlink configuration dedicated information; or
second configuration information, where the second configuration information includes slot format indicator information in downlink control information (DCI) format 2-0.

In some embodiments, the processor is further used for reading the computer in the memory and performing the following operations:
determining time domain configuration information of a sub-band,
where in case that the first configuration information indicates that the symbol category is downlink, the transmission configuration includes one or more of the following:
   in case that the time domain configuration information of the sub-band is carried by a second-type message, a terminal does not perform downlink reception on the first resource within the time unit;
   in case that the time domain configuration information of the sub-band is carried by a first-type message, a terminal does not perform downlink reception on the first resource within the time unit; or
   in case that the time domain configuration information of the sub-band is carried by a first-type message, a terminal performs downlink reception on the first resource within the time unit.

In some embodiments, in case that the first configuration information indicates that the symbol category is flexible and the second configuration information indicates that the symbol category is downlink, the transmission configuration includes one of the following:
a terminal performs downlink reception on the first resource within the time unit; or
a terminal does not perform downlink reception on the first resource within the time unit.

In some embodiments, the processor is further used for reading the computer in the memory and performing the following operations:
determining time domain configuration information of a sub-band,
where in case that the first configuration information indicates that the symbol category is flexible, or in case that the second configuration information indicates that the symbol category is flexible, the transmission configuration includes one or more of the following:
   in case that the time domain configuration information of the sub-band is carried by a second-type message, a terminal performs uplink transmission on the first resource within the time unit;
   in case that the time domain configuration information of the sub-band is carried by a second-type message, a terminal does not perform downlink reception on the first resource within the time unit;
   in case that the time domain configuration information of the sub-band is carried by a second-type message, a terminal performs downlink reception on the second resource within the time unit;
   in case that the time domain configuration information of the sub-band is carried by a first-type message, a terminal performs uplink transmission on the first resource within the time unit;
   in case that the time domain configuration information of the sub-band is carried by a first-type message, a terminal does not perform downlink reception on the first resource within the time unit;
   in case that the time domain configuration information of the sub-band is carried by a first-type message, a terminal performs downlink reception on the second resource within the time unit;
   in case that the time domain configuration information of the sub-band is carried by a first-type message, a terminal performs flexible transmission on the first resource within the time unit; or
   in case that the time domain configuration information of the sub-band is carried by a first-type message, a terminal performs flexible transmission on the second resource within the time unit.

In some embodiments, the processor is further used for reading the computer in the memory and performing the following operations:
determining time domain configuration information of a sub-band,
where in case that the first configuration information indicates that the symbol category is flexible, the transmission configuration includes:
   in case that the time domain configuration information of the sub-band is carried by a second-type message, a terminal performs flexible transmission on the second resource within the time unit.

In some embodiments, in case that the symbol category is uplink, a terminal does not configure the uplink sub-band within the time unit.

The above-mentioned network device provided by the embodiment of the present application may implement all the method steps implemented by the method embodiment performed by a network device, and may achieve the same effect. The parts and beneficial effects of this embodiment that are the same as the method embodiment are not described in detail here.

FIG. 5 is a first schematic structural diagram of an apparatus for transmission configuration determination according to an embodiment of the present application. As shown in FIG. 5, an embodiment of the present application provides an apparatus for transmission configuration determination, including a first determining module 501 and a second determining module 502,
where the first determining module 501 is used for determining a symbol category of a time unit based on symbol category indication information; and
the second determining module 502 is used for determining a transmission configuration on a target resource within the time unit based on the symbol category.

In some embodiments, the target resource includes one or more of the following resources:
a first resource, where the first resource is an uplink sub-band; or
a second resource, where the second resource is a sub-band other than an uplink sub-band within a bandwidth part range; or the second resource is a sub-band other than an uplink sub-band and a guard band within a bandwidth part range.

In some embodiments, in case that the symbol category is downlink, the transmission configuration includes one or more of the following:
a terminal performs uplink transmission on the first resource within the time unit;
a terminal performs downlink reception on the second resource within the time unit; or
a terminal does not perform uplink transmission on the second resource within the time unit.

In some embodiments, the symbol category indication information includes one or more of the following:
first configuration information, where the first configuration information includes time division duplex uplink-downlink configuration common information and/or time division duplex uplink-downlink configuration dedicated information; or
second configuration information, where the second configuration information includes slot format indicator information in downlink control information (DCI) format 2-0.

In some embodiments, the apparatus further includes:
a fifth determining module, used for determining time domain configuration information of a sub-band,
where in case that the first configuration information indicates that the symbol category is downlink, the transmission configuration includes one or more of the following:
   in case that the time domain configuration information of the sub-band is carried by a second-type message, a terminal does not perform downlink reception on the first resource within the time unit;
   in case that the time domain configuration information of the sub-band is carried by a first-type message, a terminal does not perform downlink reception on the first resource within the time unit; or
   in case that the time domain configuration information of the sub-band is carried by a first-type message, a terminal performs downlink reception on the first resource within the time unit.

In some embodiments, in case that the first configuration information indicates that the symbol category is flexible and the second configuration information indicates that the symbol category is downlink, the transmission configuration includes one of the following:
a terminal performs downlink reception on the first resource within the time unit; or
a terminal does not perform downlink reception on the first resource within the time unit.

In some embodiments, the apparatus further includes:
a sixth determining module, used for determining time domain configuration information of a sub-band,
where in case that the first configuration information indicates that the symbol category is flexible, or in case that the second configuration information indicates that the symbol category is flexible, the transmission configuration includes one or more of the following:
   in case that the time domain configuration information of the sub-band is carried by a second-type message, a terminal performs uplink transmission on the first resource within the time unit;
   in case that the time domain configuration information of the sub-band is carried by a second-type message, a terminal does not perform downlink reception on the first resource within the time unit;
   in case that the time domain configuration information of the sub-band is carried by a second-type message, a terminal performs downlink reception on the second resource within the time unit;
   in case that the time domain configuration information of the sub-band is carried by a first-type message, a terminal performs uplink transmission on the first resource within the time unit;
   in case that the time domain configuration information of the sub-band is carried by a first-type message, a terminal does not perform downlink reception on the first resource within the time unit;
   in case that the time domain configuration information of the sub-band is carried by a first-type message, a terminal performs downlink reception on the second resource within the time unit;
   in case that the time domain configuration information of the sub-band is carried by a first-type message, a terminal performs flexible transmission on the first resource within the time unit; or
   in case that the time domain configuration information of the sub-band is carried by a first-type message, a terminal performs flexible transmission on the second resource within the time unit.

In some embodiments, the apparatus further includes:
a seventh determining module, used for determining time domain configuration information of a sub-band,
where in case that the first configuration information indicates that the symbol category is flexible, the transmission configuration includes:
   in case that the time domain configuration information of the sub-band is carried by a second-type message, a terminal performs flexible transmission on the second resource within the time unit

In some embodiments, in case that the symbol category is uplink, a terminal does not configure the uplink sub-band within the time unit.

In some embodiments, the first-type message is a radio resource control (RRC) message, or the second-type message is a medium access control-control element (MAC CE) or DCI message.

The above apparatus for transmission configuration determination provided by the embodiment of the present application may implement all the method steps implemented by the method embodiment performed by a terminal, and may achieve the same effect. The parts and beneficial effects of this embodiment that are the same as the method embodiment are not described in detail here.

FIG. 6 is a second schematic structural diagram of an apparatus for transmission configuration determination according to an embodiment of the present application. As shown in FIG. 6, an embodiment of the present application provides an apparatus for transmission configuration determination, including a third determining module 601 and a fourth determining module 602,
where the third determining module 601 is used for determining a symbol category of a time unit; and
the fourth determining module 602 is used for determining a transmission configuration on a target resource within the time unit based on the symbol category.

In some embodiments, the target resource includes one or more of the following resources:
a first resource, where the first resource is an uplink sub-band; or
a second resource, where the second resource is a sub-band other than an uplink sub-band within a bandwidth part range; or the second resource is a sub-band other than an uplink sub-band and a guard band within a bandwidth part range.

In some embodiments, in case that the symbol category is downlink, the transmission configuration includes one or more of the following:
a terminal performs uplink transmission on the first resource within the time unit;
a terminal performs downlink reception on the second resource within the time unit; or
a terminal does not perform uplink transmission on the second resource within the time unit.

In some embodiments, the symbol category indication information includes one or more of the following:
first configuration information, where the first configuration information includes time division duplex uplink-downlink configuration common information and/or time division duplex uplink-downlink configuration dedicated information; or
second configuration information, where the second configuration information includes slot format indicator information in downlink control information (DCI) format 2-0.

In some embodiments, the apparatus further includes:
an eighth determining module, used for determining time domain configuration information of a sub-band,
where in case that the first configuration information indicates that the symbol category is downlink, the transmission configuration includes one or more of the following:
   in case that the time domain configuration information of the sub-band is carried by a second-type message, a terminal does not perform downlink reception on the first resource within the time unit;
   in case that the time domain configuration information of the sub-band is carried by a first-type message, a terminal does not perform downlink reception on the first resource within the time unit; or
   in case that the time domain configuration information of the sub-band is carried by a first-type message, a terminal performs downlink reception on the first resource within the time unit.

In some embodiments, in case that the first configuration information indicates that the symbol category is flexible and the second configuration information indicates that the symbol category is downlink, the transmission configuration includes one of the following:
a terminal performs downlink reception on the first resource within the time unit; or
a terminal does not perform downlink reception on the first resource within the time unit.

In some embodiments, the apparatus further includes:
a ninth determining module, used for determining time domain configuration information of a sub-band,
where in case that the first configuration information indicates that the symbol category is flexible, or in case that the second configuration information indicates that the symbol category is flexible, the transmission configuration includes one or more of the following:
   in case that the time domain configuration information of the sub-band is carried by a second-type message, a terminal performs uplink transmission on the first resource within the time unit;
   in case that the time domain configuration information of the sub-band is carried by a second-type message, a terminal does not perform downlink reception on the first resource within the time unit;
   in case that the time domain configuration information of the sub-band is carried by a second-type message, a terminal performs downlink reception on the second resource within the time unit;
   in case that the time domain configuration information of the sub-band is carried by a first-type message, a terminal performs uplink transmission on the first resource within the time unit;
   in case that the time domain configuration information of the sub-band is carried by a first-type message, a terminal does not perform downlink reception on the first resource within the time unit;
   in case that the time domain configuration information of the sub-band is carried by a first-type message, a terminal performs downlink reception on the second resource within the time unit;
   in case that the time domain configuration information of the sub-band is carried by a first-type message, a terminal performs flexible transmission on the first resource within the time unit; or
   in case that the time domain configuration information of the sub-band is carried by a first-type message, a terminal performs flexible transmission on the second resource within the time unit.

In some embodiments, the apparatus further includes:
a tenth determining module, used for determining time domain configuration information of a sub-band,
where in case that the first configuration information indicates that the symbol category is flexible, the transmission configuration includes:
   in case that the time domain configuration information of the sub-band is carried by a second-type message, a terminal performs flexible transmission on the second resource within the time unit.

In some embodiments, in case that the symbol category is uplink, a terminal does not configure the uplink sub-band within the time unit.

The above apparatus for transmission configuration determination provided by the embodiments of the present application may implement all the method steps implemented by the above method embodiments performed by a network device, and may achieve the same effect. The parts and beneficial effects of this embodiment that are the same as the method embodiment are not described in detail here.

The division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

An embodiment of the present application further provides a computer-readable storage medium, where the computer-readable storage medium stores a computer program, and the computer program is used to cause a computer to perform any of the methods for transmission configuration determination provided by the above method embodiments.

The above-mentioned computer-readable storage medium provided by the embodiments of the present application may implement all the method steps implemented by the above method embodiments, and may achieve the same effects. The same parts and beneficial effects as the same method embodiments are not repeated in the present application.

The computer-readable storage medium may be any available medium or data storage device that may be accessed by a processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

Terms "first", "second", etc. in embodiments of the present application are used to distinguish similar objects, and are not used to describe a specific order or sequence. The terms used in this way may be interchangeable under appropriate circumstances, so that the embodiments of the present application may be implemented in an order other than those illustrated or described herein, and the objects distinguished by "first" and "second" are generally of the same type, and a quantity of objects is not limited. For example, the number of a first objects may be one or more.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

The term "multiple" in embodiments of the present application refers to two or more than two, and other quantifiers are similar thereto.

The solutions provided by the embodiments of the present application may be applied to a variety of systems, especially 5th generation mobile communication technology (5G) systems. For example, the applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network part, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CNs) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiated protocol (SIP) phones, wireless local loop (WLL) stations, personal digital assistants (PDAs), and other devices. The wireless terminal device may also be referred to as a system, a subscriber unit, a subscriber station, a mobile station, a mobile, a remote station, an access point, a remote terminal device, an access terminal device, a user terminal device, a user agent, or a user device, which is not limited in the embodiments of the present application.

The network device involved in the embodiments of the present application may be a base station. The base station may include multiple cells that provide services to a terminal. Depending on the specific application scenario, the base station may also be referred to as an access point, or may be a device in an access network that communicates with a wireless terminal device through one or more sectors on an air interface, or other names. The network device may be used to interchange received air frames with Internet Protocol (IP) packets, and serve as a router between the wireless terminal device and the rest of the access network, where the rest of the access network may include an IP communication network. The network device may also coordinate the attribute management of the air interface. For example, the network device involved in the embodiments of the present application may be a base transceiver station (BTS) in the global system for mobile communications (GSM) or code division multiple access (CDMA), or a network device (node B) in wide-band code division multiple access (WCDMA), or an evolutional network device (eNB or e-NodeB) in the long term evolution (LTE) system, a 5G base station (gNB) in the 5G network architecture (next generation system), or a home evolved node B (HeNB), a relay node, a home base station (femto), a pico base station (pico), etc., which is not limited in the embodiments of the present application. In some network structures, the network device may include a centralized unit (CU) node and a distributed unit (DU) node, and the centralized unit and the distributed unit may also be arranged geographically separately.

The terms "determine B based on A" in the present application means that a factor A should be considered when determining B. It is not limited to "determining B based solely on A", but should also include: "determining B based on A and C", "determining B based on A, C, and E", "determining C based on A and further determining B based on C", etc. In addition, it can also include using A as a condition for determining B, for another example, "when A satisfies a first condition, use a first method to determine B"; for example, "when A satisfies a second condition, determine B" and so on; for a further example, "when A satisfies a third condition, determine B based on a first parameter" and so on. A may also be used as a condition for determining B, such as "when A satisfies a first condition, use a first method to determine C, and further determine B based on C", etc.

Network devices and terminal devices may each use one or more antennas for multi-input multi-output (MIMO) transmission. The MIMO transmission may be single user MIMO (SU-MIMO) or multi user MIMO (MU-MIMO). Depending on the form and the quantity of antenna combinations, MIMO transmission may be 2D-MIMO, 3D-MIMO, FD-MIMO or massive-MIMO, or may be diversity transmission, precoding transmission or beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for transmission configuration determination, performed by a terminal, comprising:
determining a symbol category of a time unit based on symbol category indication information; and
determining a transmission configuration on a target resource within the time unit based on the symbol category.

2. The method of claim 1, wherein the target resource comprises one or more of the following resources:
a first resource, wherein the first resource is an uplink sub-band; or
a second resource, wherein the second resource is a sub-band other than an uplink sub-band within a bandwidth part range; or the second resource is a sub-band other than an uplink sub-band and a guard band within a bandwidth part range.

3. The method of claim 2, wherein in case that the symbol category is downlink, the transmission configuration comprises one or more of the following:
the terminal performs uplink transmission on the first resource within the time unit;
the terminal performs downlink reception on the second resource within the time unit; or
the terminal does not perform uplink transmission on the second resource within the time unit.

4. The method of claim 2, wherein the symbol category indication information comprises one or more of the following:
first configuration information, wherein the first configuration information comprises time division duplex uplink-downlink configuration common information and/or time division duplex uplink-downlink configuration dedicated information; or
second configuration information, wherein the second configuration information comprises slot format indicator information in downlink control information, DCI, format 2-0.

5. The method of claim 4, further comprising:
determining time domain configuration information of a sub-band,
wherein in case that the first configuration information indicates that the symbol category is downlink, the transmission configuration comprises one or more of the following:
in case that the time domain configuration information of the sub-band is carried by a second-type message, the terminal does not perform downlink reception on the first resource within the time unit;
in case that the time domain configuration information of the sub-band is carried by a first-type message, the terminal does not perform downlink reception on the first resource within the time unit; or
in case that the time domain configuration information of the sub-band is carried by a first-type message, the terminal performs downlink reception on the first resource within the time unit.

6. The method of claim 4, wherein in case that the first configuration information indicates that the symbol category is flexible and the second configuration information indicates that the symbol category is downlink, the transmission configuration comprises one of the following:
the terminal performs downlink reception on the first resource within the time unit; or
the terminal does not perform downlink reception on the first resource within the time unit.

7. The method of claim 3, further comprising:
determining time domain configuration information of a sub-band,
wherein in case that the first configuration information indicates that the symbol category is flexible, or in case that the second configuration information indicates that the symbol category is flexible, the transmission configuration comprises one or more of the following:
in case that the time domain configuration information of the sub-band is carried by a second-type message, the terminal performs uplink transmission on the first resource within the time unit;
in case that the time domain configuration information of the sub-band is carried by a second-type message, the terminal does not perform downlink reception on the first resource within the time unit;
in case that the time domain configuration information of the sub-band is carried by a second-type message, the terminal performs downlink reception on the second resource within the time unit;
in case that the time domain configuration information of the sub-band is carried by a first-type message, the terminal performs uplink transmission on the first resource within the time unit;
in case that the time domain configuration information of the sub-band is carried by a first-type message, the terminal does not perform downlink reception on the first resource within the time unit;
in case that the time domain configuration information of the sub-band is carried by a first-type message, the terminal performs downlink reception on the second resource within the time unit;
in case that the time domain configuration information of the sub-band is carried by a first-type message, the terminal performs flexible transmission on the first resource within the time unit; or
in case that the time domain configuration information of the sub-band is carried by a first-type message, the terminal performs flexible transmission on the second resource within the time unit.

8. The method of claim 4, further comprising:
determining time domain configuration information of a sub-band,
wherein in case that the first configuration information indicates that the symbol category is flexible, the transmission configuration comprises:
in case that the time domain configuration information of the sub-band is carried by a second-type message, the terminal performs flexible transmission on the second resource within the time unit.

9. The method of claim 2, wherein in case that the symbol category is uplink, the terminal does not configure the uplink sub-band within the time unit.

10. The method of claim 5, 7 or 8, wherein the first-type message is a radio resource control, RRC, message, or the second-type message is a medium access control-control element, MAC CE, or DCI message.

11. A method for transmission configuration determination, performed by a network device, comprising:
determining a symbol category of a time unit; and
determining a transmission configuration on a target resource within the time unit based on the symbol category.

12. The method of claim 11, wherein the target resource comprises one or more of the following resources:
a first resource, wherein the first resource is an uplink sub-band; or
a second resource, wherein the second resource is a sub-band other than an uplink sub-band within a bandwidth part range; or the second resource is a sub-band other than an uplink sub-band and a guard band within a bandwidth part range.

13. The method of claim 12, wherein in case that the symbol category is downlink, the transmission configuration comprises one or more of the following:
a terminal performs uplink transmission on the first resource within the time unit;
a terminal performs downlink reception on the second resource within the time unit; or
a terminal does not perform uplink transmission on the second resource within the time unit.

14. The method of claim 12, wherein the symbol category indication information comprises one or more of the following:
first configuration information, wherein the first configuration information comprises time division duplex uplink-downlink configuration common information and/or time division duplex uplink-downlink configuration dedicated information; or
second configuration information, wherein the second configuration information comprises slot format indicator information in downlink control information, DCI, format 2-0.

15. The method of claim 14, further comprising:
determining time domain configuration information of a sub-band,
wherein in case that the first configuration information indicates that the symbol category is downlink, the transmission configuration comprises one or more of the following:
in case that the time domain configuration information of the sub-band is carried by a second-type message, a terminal does not perform downlink reception on the first resource within the time unit;
in case that the time domain configuration information of the sub-band is carried by a first-type message, a terminal does not perform downlink reception on the first resource within the time unit; or
in case that the time domain configuration information of the sub-band is carried by a first-type message, a terminal performs downlink reception on the first resource within the time unit.

16. The method of claim 14, wherein in case that the first configuration information indicates that the symbol category is flexible and the second configuration information indicates that the symbol category is downlink, the transmission configuration comprises one of the following:
a terminal performs downlink reception on the first resource within the time unit; or
a terminal does not perform downlink reception on the first resource within the time unit.

17. The method of claim 13, further comprising:
determining time domain configuration information of a sub-band,
wherein in case that the first configuration information indicates that the symbol category is flexible, or in case that the second configuration information indicates that the symbol category is flexible, the transmission configuration comprises one or more of the following:
in case that the time domain configuration information of the sub-band is carried by a second-type message, a terminal performs uplink transmission on the first resource within the time unit;
in case that the time domain configuration information of the sub-band is carried by a second-type message, a terminal does not perform downlink reception on the first resource within the time unit;
in case that the time domain configuration information of the sub-band is carried by a second-type message, a terminal performs downlink reception on the second resource within the time unit;
in case that the time domain configuration information of the sub-band is carried by a first-type message, a terminal performs uplink transmission on the first resource within the time unit;
in case that the time domain configuration information of the sub-band is carried by a first-type message, a terminal does not perform downlink reception on the first resource within the time unit;
in case that the time domain configuration information of the sub-band is carried by a first-type message, a terminal performs downlink reception on the second resource within the time unit;
in case that the time domain configuration information of the sub-band is carried by a first-type message, a terminal performs flexible transmission on the first resource within the time unit; or
in case that the time domain configuration information of the sub-band is carried by a first-type message, a terminal performs flexible transmission on the second resource within the time unit.

18. The method of claim 14, further comprising:
determining time domain configuration information of a sub-band,
wherein in case that the first configuration information indicates that the symbol category is flexible, the transmission configuration comprises:
in case that the time domain configuration information of the sub-band is carried by a second-type message, a terminal performs flexible transmission on the second resource within the time unit.

19. The method of claim 12, wherein in case that the symbol category is uplink, a terminal does not configure the uplink sub-band within the time unit.

20. A terminal, comprising a memory, a transceiver and a processor,
wherein the memory is used for storing a computer program, the transceiver is used for receiving and sending data under control of the processor; and the processor is used for reading the computer program in the memory and performing the following operations:
determining a symbol category of a time unit based on symbol category indication information; and
determining a transmission configuration on a target resource within the time unit based on the symbol category.

21. The terminal of claim 20, wherein the target resource comprises one or more of the following resources:
a first resource, wherein the first resource is an uplink sub-band; or
a second resource, wherein the second resource is a sub-band other than an uplink sub-band within a bandwidth part range; or the second resource is a sub-band other than an uplink sub-band and a guard band within a bandwidth part range.

22. The terminal of claim 21, wherein in case that the symbol category is downlink, the transmission configuration comprises one or more of the following:
the terminal performs uplink transmission on the first resource within the time unit;
the terminal performs downlink reception on the second resource within the time unit; or
the terminal does not perform uplink transmission on the second resource within the time unit.

23. The terminal of claim 21, wherein the symbol category indication information comprises one or more of the following:
first configuration information, wherein the first configuration information comprises time division duplex uplink-downlink configuration common information and/or time division duplex uplink-downlink configuration dedicated information; or
second configuration information, wherein the second configuration information comprises slot format indicator information in downlink control information, DCI, format 2-0.

24. The terminal of claim 23, wherein the processor is further used for reading the computer in the memory and performing the following operations:
determining time domain configuration information of a sub-band,
wherein in case that the first configuration information indicates that the symbol category is downlink, the transmission configuration comprises one or more of the following:
in case that the time domain configuration information of the sub-band is carried by a second-type message, the terminal does not perform downlink reception on the first resource within the time unit;
in case that the time domain configuration information of the sub-band is carried by a first-type message, the terminal does not perform downlink reception on the first resource within the time unit; or
in case that the time domain configuration information of the sub-band is carried by a first-type message, the terminal performs downlink reception on the first resource within the time unit.

25. The terminal of claim 23, wherein in case that the first configuration information indicates that the symbol category is flexible and the second configuration information indicates that the symbol category is downlink, the transmission configuration comprises one of the following:
the terminal performs downlink reception on the first resource within the time unit; or
the terminal does not perform downlink reception on the first resource within the time unit.

26. The terminal of claim 22, wherein the processor is further used for reading the computer in the memory and performing the following operations:
determining time domain configuration information of a sub-band,
wherein in case that the first configuration information indicates that the symbol category is flexible, or in case that the second configuration information indicates that the symbol category is flexible, the transmission configuration comprises one or more of the following:
in case that the time domain configuration information of the sub-band is carried by a second-type message, the terminal performs uplink transmission on the first resource within the time unit;
in case that the time domain configuration information of the sub-band is carried by a second-type message, the terminal does not perform downlink reception on the first resource within the time unit;
in case that the time domain configuration information of the sub-band is carried by a second-type message, the terminal performs downlink reception on the second resource within the time unit;
in case that the time domain configuration information of the sub-band is carried by a first-type message, the terminal performs uplink transmission on the first resource within the time unit;
in case that the time domain configuration information of the sub-band is carried by a first-type message, the terminal does not perform downlink reception on the first resource within the time unit;
in case that the time domain configuration information of the sub-band is carried by a first-type message, the terminal performs downlink reception on the second resource within the time unit;
in case that the time domain configuration information of the sub-band is carried by a first-type message, the terminal performs flexible transmission on the first resource within the time unit; or
in case that the time domain configuration information of the sub-band is carried by a first-type message, the terminal performs flexible transmission on the second resource within the time unit.

27. The terminal of claim 23, wherein the processor is further used for reading the computer in the memory and performing the following operations:
determining time domain configuration information of a sub-band,
wherein in case that the first configuration information indicates that the symbol category is flexible, the transmission configuration comprises:
in case that the time domain configuration information of the sub-band is carried by a second-type message, the terminal performs flexible transmission on the second resource within the time unit.

28. The terminal of claim 21, wherein in case that the symbol category is uplink, the terminal does not configure the uplink sub-band within the time unit.

29. The terminal of claim 24, 26 or 27, wherein the first-type message is a radio resource control, RRC, message, or the second-type message is a medium access control-control element, MAC CE, or DCI message.

30. A network device, comprising a memory, a transceiver and a processor,
wherein the memory is used for storing a computer program, the transceiver is used for receiving and sending data under control of the processor; and the processor is used for reading the computer program in the memory and performing the following operations:
determining a symbol category of a time unit; and
determining a transmission configuration on a target resource within the time unit based on the symbol category.

31. The network device of claim 30, wherein the target resource comprises one or more of the following resources:
a first resource, wherein the first resource is an uplink sub-band; or
a second resource, wherein the second resource is a sub-band other than an uplink sub-band within a bandwidth part range; or the second resource is a sub-band other than an uplink sub-band and a guard band within a bandwidth part range.

32. The network device of claim 31, wherein in case that the symbol category is downlink, the transmission configuration comprises one or more of the following:
a terminal performs uplink transmission on the first resource within the time unit;
a terminal performs downlink reception on the second resource within the time unit; or
a terminal does not perform uplink transmission on the second resource within the time unit.

33. The network device of claim 31, wherein the symbol category indication information comprises one or more of the following:
first configuration information, wherein the first configuration information comprises time division duplex uplink-downlink configuration common information and/or time division duplex uplink-downlink configuration dedicated information; or
second configuration information, wherein the second configuration information comprises slot format indicator information in downlink control information, DCI, format 2-0.

34. The network device of claim 33, wherein the processor is further used for reading the computer in the memory and performing the following operations:
determining time domain configuration information of a sub-band,
wherein in case that the first configuration information indicates that the symbol category is downlink, the transmission configuration comprises one or more of the following:
in case that the time domain configuration information of the sub-band is carried by a second-type message, a terminal does not perform downlink reception on the first resource within the time unit;
in case that the time domain configuration information of the sub-band is carried by a first-type message, a terminal does not perform downlink reception on the first resource within the time unit; or
in case that the time domain configuration information of the sub-band is carried by a first-type message, a terminal performs downlink reception on the first resource within the time unit.

35. The network device of claim 33, wherein in case that the first configuration information indicates that the symbol category is flexible and the second configuration information indicates that the symbol category is downlink, the transmission configuration comprises one of the following:
a terminal performs downlink reception on the first resource within the time unit; or
a terminal does not perform downlink reception on the first resource within the time unit.

36. The network device of claim 32, wherein the processor is further used for reading the computer in the memory and performing the following operations:
determining time domain configuration information of a sub-band,
wherein in case that the first configuration information indicates that the symbol category is flexible, or in case that the second configuration information indicates that the symbol category is flexible, the transmission configuration comprises one or more of the following:
in case that the time domain configuration information of the sub-band is carried by a second-type message, a terminal performs uplink transmission on the first resource within the time unit;
in case that the time domain configuration information of the sub-band is carried by a second-type message, a terminal does not perform downlink reception on the first resource within the time unit;
in case that the time domain configuration information of the sub-band is carried by a second-type message, a terminal performs downlink reception on the second resource within the time unit;
in case that the time domain configuration information of the sub-band is carried by a first-type message, a terminal performs uplink transmission on the first resource within the time unit;
in case that the time domain configuration information of the sub-band is carried by a first-type message, a terminal does not perform downlink reception on the first resource within the time unit;
in case that the time domain configuration information of the sub-band is carried by a first-type message, a terminal performs downlink reception on the second resource within the time unit;
in case that the time domain configuration information of the sub-band is carried by a first-type message, a terminal performs flexible transmission on the first resource within the time unit; or
in case that the time domain configuration information of the sub-band is carried by a first-type message, a terminal performs flexible transmission on the second resource within the time unit.

37. The network device of claim 33, wherein the processor is further used for reading the computer in the memory and performing the following operations:
determining time domain configuration information of a sub-band,
wherein in case that the first configuration information indicates that the symbol category is flexible, the transmission configuration comprises:
in case that the time domain configuration information of the sub-band is carried by a second-type message, a terminal performs flexible transmission on the second resource within the time unit.

38. The network device of claim 31, wherein in case that the symbol category is uplink, a terminal does not configure the uplink sub-band within the time unit.

39. An apparatus for transmission configuration determination, comprising:
a first determining module, used for determining a symbol category of a time unit based on symbol category indication information; and
a second determining module, used for determining a transmission configuration on a target resource within the time unit based on the symbol category.

40. The apparatus of claim 39, wherein the target resource comprises one or more of the following resources:
a first resource, wherein the first resource is an uplink sub-band; or
a second resource, wherein the second resource is a sub-band other than an uplink sub-band within a bandwidth part range; or the second resource is a sub-band other than an uplink sub-band and a guard band within a bandwidth part range.

41. The apparatus of claim 40, wherein in case that the symbol category is downlink, the transmission configuration comprises one or more of the following:
a terminal performs uplink transmission on the first resource within the time unit;
a terminal performs downlink reception on the second resource within the time unit; or
a terminal does not perform uplink transmission on the second resource within the time unit.

42. The apparatus of claim 40, wherein the symbol category indication information comprises one or more of the following:
first configuration information, wherein the first configuration information comprises time division duplex uplink-downlink configuration common information and/or time division duplex uplink-downlink configuration dedicated information; or
second configuration information, wherein the second configuration information comprises slot format indicator information in downlink control information, DCI, format 2-0.

43. The apparatus of claim 42, further comprising:
a fifth determining module, used for determining time domain configuration information of a sub-band,
wherein in case that the first configuration information indicates that the symbol category is downlink, the transmission configuration comprises one or more of the following:
in case that the time domain configuration information of the sub-band is carried by a second-type message, a terminal does not perform downlink reception on the first resource within the time unit;
in case that the time domain configuration information of the sub-band is carried by a first-type message, a terminal does not perform downlink reception on the first resource within the time unit; or
in case that the time domain configuration information of the sub-band is carried by a first-type message, a terminal performs downlink reception on the first resource within the time unit.

44. The apparatus of claim 42, wherein in case that the first configuration information indicates that the symbol category is flexible and the second configuration information indicates that the symbol category is downlink, the transmission configuration comprises one of the following:
a terminal performs downlink reception on the first resource within the time unit; or
a terminal does not perform downlink reception on the first resource within the time unit.

45. The apparatus of claim 41, further comprising:
a sixth determining module, used for determining time domain configuration information of a sub-band,
wherein in case that the first configuration information indicates that the symbol category is flexible, or in case that the second configuration information indicates that the symbol category is flexible, the transmission configuration comprises one or more of the following:
in case that the time domain configuration information of the sub-band is carried by a second-type message, a terminal performs uplink transmission on the first resource within the time unit;
in case that the time domain configuration information of the sub-band is carried by a second-type message, a terminal does not perform downlink reception on the first resource within the time unit;
in case that the time domain configuration information of the sub-band is carried by a second-type message, a terminal performs downlink reception on the second resource within the time unit;
in case that the time domain configuration information of the sub-band is carried by a first-type message, a terminal performs uplink transmission on the first resource within the time unit;
in case that the time domain configuration information of the sub-band is carried by a first-type message, a terminal does not perform downlink reception on the first resource within the time unit;
in case that the time domain configuration information of the sub-band is carried by a first-type message, a terminal performs downlink reception on the second resource within the time unit;
in case that the time domain configuration information of the sub-band is carried by a first-type message, a terminal performs flexible transmission on the first resource within the time unit; or
in case that the time domain configuration information of the sub-band is carried by a first-type message, a terminal performs flexible transmission on the second resource within the time unit.

46. The apparatus of claim 42, further comprising:
a seventh determining module, used for determining time domain configuration information of a sub-band,
wherein in case that the first configuration information indicates that the symbol category is flexible, the transmission configuration comprises:
in case that the time domain configuration information of the sub-band is carried by a second-type message, a terminal performs flexible transmission on the second resource within the time unit.

47. The apparatus of claim 40, wherein in case that the symbol category is uplink, a terminal does not configure the uplink sub-band within the time unit.

48. The apparatus of claim 43, 45 or 46, wherein the first-type message is a radio resource control, RRC, message, or the second-type message is a medium access control-control element, MAC CE, or DCI message.

49. An apparatus for transmission configuration determination, comprising:
a third determining module, used for determining a symbol category of a time unit; and
a fourth determining module, used for determining a transmission configuration on a target resource within the time unit based on the symbol category.

50. The apparatus of claim 49, wherein the target resource comprises one or more of the following resources:
a first resource, wherein the first resource is an uplink sub-band; or
a second resource, wherein the second resource is a sub-band other than an uplink sub-band within a bandwidth part range; or the second resource is a sub-band other than an uplink sub-band and a guard band within a bandwidth part range.

51. The apparatus of claim 50, wherein in case that the symbol category is downlink, the transmission configuration comprises one or more of the following:
a terminal performs uplink transmission on the first resource within the time unit;
a terminal performs downlink reception on the second resource within the time unit; or
a terminal does not perform uplink transmission on the second resource within the time unit.

52. The apparatus of claim 50, wherein the symbol category indication information comprises one or more of the following:
first configuration information, wherein the first configuration information comprises time division duplex uplink-downlink configuration common information and/or time division duplex uplink-downlink configuration dedicated information; or
second configuration information, wherein the second configuration information comprises slot format indicator information in downlink control information, DCI, format 2-0.

53. The apparatus of claim 52, further comprising:
an eighth determining module, used for determining time domain configuration information of a sub-band,
wherein in case that the first configuration information indicates that the symbol category is downlink, the transmission configuration comprises one or more of the following:
in case that the time domain configuration information of the sub-band is carried by a second-type message, a terminal does not perform downlink reception on the first resource within the time unit;
in case that the time domain configuration information of the sub-band is carried by a first-type message, a terminal does not perform downlink reception on the first resource within the time unit; or
in case that the time domain configuration information of the sub-band is carried by a first-type message, a terminal performs downlink reception on the first resource within the time unit.

54. The apparatus of claim 52, wherein in case that the first configuration information indicates that the symbol category is flexible and the second configuration information indicates that the symbol category is downlink, the transmission configuration comprises one of the following:
a terminal performs downlink reception on the first resource within the time unit; or
a terminal does not perform downlink reception on the first resource within the time unit.

55. The apparatus of claim 51, further comprising:
a ninth determining module, used for determining time domain configuration information of a sub-band,
wherein in case that the first configuration information indicates that the symbol category is flexible, or in case that the second configuration information indicates that the symbol category is flexible, the transmission configuration comprises one or more of the following:
in case that the time domain configuration information of the sub-band is carried by a second-type message, a terminal performs uplink transmission on the first resource within the time unit;
in case that the time domain configuration information of the sub-band is carried by a second-type message, a terminal does not perform downlink reception on the first resource within the time unit;
in case that the time domain configuration information of the sub-band is carried by a second-type message, a terminal performs downlink reception on the second resource within the time unit;
in case that the time domain configuration information of the sub-band is carried by a first-type message, a terminal performs uplink transmission on the first resource within the time unit;
in case that the time domain configuration information of the sub-band is carried by a first-type message, a terminal does not perform downlink reception on the first resource within the time unit;
in case that the time domain configuration information of the sub-band is carried by a first-type message, a terminal performs downlink reception on the second resource within the time unit;
in case that the time domain configuration information of the sub-band is carried by a first-type message, a terminal performs flexible transmission on the first resource within the time unit; or
in case that the time domain configuration information of the sub-band is carried by a first-type message, a terminal performs flexible transmission on the second resource within the time unit.

56. The apparatus of claim 52, further comprising:
a tenth determining module, used for determining time domain configuration information of a sub-band,
wherein in case that the first configuration information indicates that the symbol category is flexible, the transmission configuration comprises:
in case that the time domain configuration information of the sub-band is carried by a second-type message, a terminal performs flexible transmission on the second resource within the time unit.

57. The apparatus of claim 50, wherein in case that the symbol category is uplink, a terminal does not configure the uplink sub-band within the time unit.

58. A computer-readable storage medium, wherein the computer-readable storage medium stores a computer program, and the computer program is used to cause a computer to perform the method of any of claims 1 to 10.

59. A computer-readable storage medium, wherein the computer-readable storage medium stores a computer program, and the computer program is used to cause a computer to perform the method of any of claims 11 to 19.
